(19) Europäisches Patentamt
European Patent Office
Office européen des brevets

(11) **EP 1 783 637 A2**

(12) **EUROPEAN PATENT APPLICATION**

(43) Date of publication:
**09.05.2007 Bulletin 2007/19**

(51) Int Cl.:
*G06F 17/30* (2006.01)

(21) Application number: **06020869.1**

(22) Date of filing: **04.10.2006**

| | |
|---|---|
| (84) Designated Contracting States:<br>**AT BE BG CH CY CZ DE DK EE ES FI FR GB GR HU IE IS IT LI LT LU LV MC NL PL PT RO SE SI SK TR**<br>Designated Extension States:<br>**AL BA HR MK YU** | (72) Inventor: **Ogawa, Kaname**<br>**Sony Corporation**<br>**Tokyo (JP)** |
| (30) Priority: **06.10.2005 JP 2005293917** | (74) Representative: **Müller - Hoffmann & Partner Patentanwälte,**<br>**Innere Wiener Strasse 17**<br>**81667 München (DE)** |
| (71) Applicant: **SONY CORPORATION**<br>**Tokyo (JP)** | |

(54) **Image processing apparatus**

(57) An image processing apparatus includes a target image storage unit storing a plurality of target images as objects to be searched, an area selection receiving unit receiving a selection of a predetermined area corresponding to one of the plurality of target images, a template image generating unit generating as a template image the image of the area with the selection thereof received, an image reducing unit reducing the template image and the target image at a reduction ratio corresponding to a vertical height and a horizontal width of the template image, and a similar image searching unit searching the reduced target image containing an image similar to the reduced template image in accordance with a genetic algorithm.

FIG. 2

EP 1 783 637 A2

**Description**

CROSS REFERENCES TO RELATED APPLICATIONS

The present invention contains subject matter related to Japanese Patent Application JP 2005-293917 filed in the Japanese Patent Office on October 6, 2005, the entire contents of which are incorporated herein by reference.

BACKGROUND OF THE INVENTION

1. Field of the Invention

The present invention relates to an image processing apparatus for searching an image and, in particular, to an image processing apparatus, an image processing method, and a computer program for searching for an image similar to a template image at a high speed.

2. Description of the Related Art

As prices of memories are reduced and technology of the memory advances, the capacity of memories in image pickup apparatuses such as digital still cameras and digital video cameras increases. The number of still images and moving images stored on the image pickup apparatuses also increases. Under this circumference, any user has difficulty in finding desired still images and moving images.

Japanese Unexamined Patent Application Publication No. 8-263522 discloses an image search method to overcome such a drawback. In accordance with the disclosed image search method, the user designates a desired image as a template image and searches for an image matching the template image from among images to be searched.

SUMMARY OF THE INVENTION

From the standpoint of miniaturization and low-cost design, high-performance central processing units (CPUs) are difficult to mount on the image pickup apparatus. Even if the above-described image search method is incorporated in an image pickup apparatus, search processing takes an unrealistically long time. There is a need for reducing time required for search processing. It is not only necessary to reduce search processing time but also necessary to maintain search accuracy level.

It is thus desirable to provide an image processing apparatus that performs image search at a high speed and high accuracy level.

In accordance with one embodiment of the present invention, an image processing apparatus includes a target image storage unit for storing a plurality of target images as objects to be searched, an area selection receiving unit for receiving a selection of a predetermined area corresponding to one of the plurality of target images, a template image generating unit for generating as a template image the image of the area with the selection thereof received, an image reducing unit for reducing the template image and the target image at a reduction ratio corresponding to a vertical height and a horizontal width of the template image, and a similar image searching unit for searching the reduced target image containing an image similar to the reduced template image in accordance with a genetic algorithm. The template image and the target image are reduced at the reduction ratio corresponding to the horizontal width and the vertical height of the selected template image, and the target images containing the image similar to the template image are searched for. By reducing the template image and the target image, the areas of the template image and the target image to be matched against each other are reduced, and an amount of calculation required for matching is decreased.

The image reducing unit may not reduce the images if a product of the vertical height and the horizontal width of the template image is not more than a predetermined value. Even when the horizontal width and the vertical height of the selected template image are small, search accuracy level is maintained.

The template image generating unit may generate, as the template image, an image which the predetermined selected area is expanded or reduced to at a predetermined magnification ratio. Images similar to the template image that are expanded, reduced or rotated are thus searched for.

The similar image searching unit may include an individual extracting unit for extracting a plurality of individuals in a random fashion from the reduced target image in order to generate a chromosome having chromosome information based on coordinates of the individual and the predetermined magnification ratio at the expansion or reduction of the template image, an adaptivity calculating unit for calculating an adaptivity of the chromosome based on the chromosome information and a pixel value, a genetic algorithm processing unit for performing at least one of a selection process, a hybridization process, and a mutation process on the chromosome having the adaptivity calculated by the adaptivity calculating unit in order to generate a chromosome having new chromosome information, and causing the adaptivity calculating unit to calculate an adaptivity of the chromosome having the new chromosome information, a process end indicating unit for indicating a process end to the process repeatedly performed in a predetermined condition by the genetic algorithm processing unit, a quasi-optimal solution determining unit for determining, as a quasi-optimal solution, an adaptivity having the largest value from among the adaptivities calculated last by the adaptivity calculating unit, and a similar image determining unit for determining that the reduced target image contains an image similar to the reduced template image when the largest one of the quasi-optimal solution is above a first threshold value. The first threshold value serves as a reference according to which the similar image determining unit determines whether the template image is contained in the target image. More specifically, if the value of the adaptivity as the quasi-optimal solution is above the first threshold value, the template image is contained in the target image. If the value of the adaptivity as the quasi-optimal solution is not above the first threshold value, the template image is not contained in the target image. In this way, information regarding an area where the template image is matched against the target image in accordance with the genetic algorithm is imparted to the chromosome. Based on the adaptivity of the chromosome, the target images containing the image similar to the template image are searched for at a high speed.

The pixel value may be a quantity expressed using one of YUV, RGB, and HSV. The adaptivity of the chromosome in accordance with the genetic algorithm is calculated based on YUV, RGB, and HSV.

The image processing apparatus may include an adaptivity calculation pre-processing unit for calculating the absolute value of a difference between the mean value of the pixel values in an area corresponding to the chromosome in the target image and the mean value of the pixel values in an area in the template image, and determining whether the absolute value of the difference is above a second threshold value, wherein the adaptivity calculating unit sets, as the adaptivity, a value small enough to be excluded as the object to be determined by the similar image determining unit when the adaptivity calculation pre-processing unit determines that the absolute value of the difference is above the second threshold value. The second threshold value serves as a reference when the adaptivity is evaluated based on the absolute value of the difference between the mean value of the pixels in the area corresponding to the chromosome in the target image and the mean value of the pixel values in the area of the template image. In this way, the adaptivity of the chromosome in the genetic algorithm is determined using a method requiring a smaller amount of calculation.

The image processing apparatus may further include an adaptivity calculation pre-processing unit for calculating the ratio of the square of the standard deviation of the pixel values in an area in the target image corresponding to the chromosome to the square of the standard deviation of the pixel values in an area in the template image, and determining whether the ratio of the two squared standard deviations falls within a predetermined range, wherein the adaptivity calculating unit sets, as the adaptivity, a value small enough to be excluded as the object to be determined by the similar image determining unit when the adaptivity calculation pre-processing unit determines that the ratio falls within the predetermined range. In this way, the adaptivity of the chromosome in the genetic algorithm is determined using a method requiring a smaller amount of calculation.

The image processing apparatus may further include an adaptivity calculation pre-processing unit for calculating the absolute value of a difference between the pixel value at the center point of an area in the target image corresponding to the chromosome and the pixel value at the center point of an area in the template image, and determining whether the absolute value of the difference is above a second threshold value, wherein the adaptivity calculating unit sets, as the adaptivity, a value small enough to be excluded as the object to be determined by the similar image determining unit when the adaptivity calculation pre-processing unit determines that the absolute value of the difference is above the second threshold value. In this way, the adaptivity of the chromosome in the genetic algorithm is determined using a method requiring a smaller amount of calculation.

The adaptivity calculating unit may calculate the adaptivity of the chromosome from a cross-correlation function based on the pixel value and the chromosome information. The adaptivity of the chromosome in the genetic algorithm is determined from the standpoint of cross-correlation between the target image and the template image.

The adaptivity calculating unit may calculate the product of a difference between the pixel value at any coordinates in the target image and the mean value of pixel values in the target image in an area where the target image and the template image overlap each other, and a difference between the pixel value at any coordinates in the template image and the mean value of the pixel values in the template image in the area where the target image and the template image overlap each other, sum the products at all coordinates in the area where the target image and the template image overlap each other, normalize the sum, and use the normalized sum as the cross-correlation function. The adaptivity of the chromosome in the genetic algorithm is determined from the standpoint of cross-correlation between the target image and the template image.

The image processing apparatus may further include a preparation value calculating unit for calculating a preparation value at each of all coordinates in the reduced template image and the reduced target image, the preparation value obtained by summing pixel values from the origin to any coordinates in the reduced template image and the reduced target image, a template image preparation value table for storing the preparation value in the reduced template image with the coordinates thereof in the reduced template image associated therewith, and a target image preparation value table for storing the preparation value in the reduced target image with the coordinates thereof in the reduced target image associated therewith, wherein the adaptivity calculating unit sums the pixel values in the cross-correlation function at all coordinates in the area where the target image and the template image overlap each other using the preparation value in order to calculate the adaptivity of the chromosome. The amount of calculation required to calculate the adaptivity of the chromosome in the genetic algorithm is reduced.

The adaptivity calculating unit may calculate the product of a difference between the pixel value at any coordinates in the target image and the mean value of pixel values in the target image in an area where the target image and the template image overlap each other, and a difference between the pixel value at any coordinates in the template image and the mean value of the pixel values in the template image in the area where the target image and the template image overlap each other, sum the products at all coordinates in the area where the target image and the template image overlap each other, normalize the sum, use the normalized sum as the cross-correlation function, calculate the cross-correlation function in terms of each of a plurality of elements forming the pixel value, square the value resulting from the cross-correlation function, sum the squared values, calculate the square root of the resulting sum, and normalize the square root value as the adaptivity. The adaptivity of the chromosome in the genetic algorithm is determined from the standpoint of cross-correlation between the target image and the template image. The cross-correlation accounts for the elements in the pixel value.

The adaptivity calculating unit may calculate the product of a difference between the pixel value at any coordinates in the target image and the mean value of pixel values in the template image in an area where the target image and the template image overlap each other, and a difference between the pixel value at any coordinates in the template image and the mean value of the pixel values in the target image in the area where the target image and the template image overlap each other, sum the products at all coordinates in the area where the target image and the template image overlap each other, normalize the sum, and use the normalized sum as the cross-correlation function. The target images containing the image similar to the template image are accurately searched for.

The adaptivity calculating unit may use as the cross-correlation function the following equation representing cross-correlation at coordinates (X,Y):

$$f(X,Y) = \frac{\sum_{i=0}^{w}\sum_{j=0}^{h}\left(Target(X+i,Y+j)-M_{Template}\right)\left(Template(i,j)-M_{Target}\right)}{\sqrt{\sum_{i=0}^{w}\sum_{j=0}^{h}\left(Target(X+i,Y+j)-M_{Template}\right)^2 \sum_{i=0}^{w}\sum_{j=0}^{h}\left(Template(i,j)-M_{Target}\right)^2}}$$

where w represents a width of the template image, h represents a height of the template image, Target (X+i,Y+j) represents a pixel value at coordinates (X+i,Y+j) in the target image, Template(i,j) represents a pixel value at coordinates (i,j) in the template image, $M_{target}$ represents the mean value of the pixel values in an area where the target image and the template image overlap each other, and $M_{template}$ represents the mean value of the pixel values in the template image. The adaptivity of the chromosome is calculated taking into consideration a DC component of the target image and the template image. The target images containing the image similar to the template image are accurately searched for.

In accordance with another embodiment of the present invention, an image processing apparatus includes a target image storage unit for storing a plurality of target images as objects to be searched, an area selection receiving unit for receiving selection of a predetermined area corresponding to one of the plurality of target images, a template image generating unit for generating, as template images, an image in the area with the selection thereof received, and an image to which the image in the area is expanded or reduced at a predetermined magnification ratio, an individual extracting unit for extracting a plurality of individuals in a random fashion from the reduced target image in order to generate a chromosome having chromosome information based on coordinates of the individual and the predetermined magnification ratio at the expansion or reduction of the template image, an adaptivity calculating unit for calculating an adaptivity of the chromosome based on the chromosome information and a pixel value, a genetic algorithm processing unit for performing at least one of a selection process, a hybridization process, and a mutation process on the chromosome having the adaptivity calculated by the adaptivity calculating unit in order to generate a chromosome having new chromosome information, and causing the adaptivity calculating unit to calculate an adaptivity of the chromosome having the new chromosome information, a process end indicating unit for indicating a process end to the process repeatedly performed in a predetermined condition by the genetic algorithm processing unit, a quasi-optimal solution determining unit for determining, as a quasi-optimal solution, an adaptivity having the largest value from among the adaptivities calculated last by the adaptivity calculating unit, a peripheral area quasi-optimal solution determining unit for calculating an adaptivity in a predetermined entire area surrounding the area of the template image corresponding to the quasi-optimal solution, and determining, as the quasi-optimal solution in the predetermined area, an adaptivity having the largest value from among the calculated adaptivities, and a similar image determining unit for determining that the reduced target image contains an image similar to the reduced template image when the largest one of the quasi-optimal solution determined by the quasi-optimal solution determining unit and the quasi-optimal solution in the predetermined area determined by the peripheral area quasi-optimal solution determining unit is above a predetermined threshold. The image processing apparatus thus reduces the possibility of search failure of the target images containing the image similar to the template image.

In accordance with another embodiment of the present invention, one of image processing method and a program of an image processing apparatus including target image storage unit storing a target image as an object to be searched, includes the steps of receiving a selection of a predetermined area corresponding to one of the plurality of target images, generating as a template image the image of the area with the selection thereof received, reducing the template image and the target image at a reduction ratio corresponding to a vertical height and a horizontal width of the template image, and searching for the reduced target image containing an image similar to the reduced template image in accordance with a genetic algorithm. The template image and the target image are reduced at the reduction ration corresponding to the horizontal width and the vertical height of the template image of the selected template image, and the target image containing the image similar to the template image is searched for at a high speed.

In accordance with embodiments of the present invention, image searching is performed at a high speed and high accuracy level.

BRIEF DESCRIPTION OF THE DRAWINGS

Figs. 1A-1D illustrate image pickup apparatuses in accordance with one embodiment of the present invention;
Fig. 2 illustrates the image pickup apparatus in accordance with one embodiment of the present invention,;
Fig. 3 is a functional block diagram of an image search function in accordance with one embodiment of the present invention;
Figs. 4A-4D illustrate a preparation value in accordance with one embodiment of the present invention;
Fig. 5 illustrates a target image preparation value table in accordance with one embodiment of the present invention;
Figs. 6A and 6B illustrate an area of a template image in accordance with one embodiment of the present invention;
Figs. 7A and 7B illustrate a template image data generation process in accordance with one embodiment of the present invention;
Figs. 8A and 8B illustrate a template image and a target image reduced by an image reducer in accordance with one embodiment of the present invention;
Fig. 9 illustrates an example of chromosome information of a chromosome in accordance with one embodiment of the present invention;
Fig. 10 illustrates a roulette for use in selection of a genetic algorithm in accordance with one embodiment of the present invention;
Figs. 11A and 11B illustrate hybridization of the genetic algorithm in accordance with one embodiment of the present invention;
Fig. 12 illustrates mutation of the genetic algorithm in accordance with one embodiment of the present invention;
Fig. 13 illustrates a process of an adaptivity calculation pre-processor in accordance with one embodiment of the present invention;
Fig. 14 illustrates a peripheral area to a matching area corresponding to a quasi-optimal solution determined by the genetic algorithm in accordance with one embodiment of the present invention;
Figs. 15A and 15B illustrate a display screen on which a target image containing an image similar to a template image is searched in accordance with one embodiment of the present invention;
Fig. 16 is a flowchart illustrating the search process of a target image containing an image similar to a template image in accordance with one embodiment of the present invention; and
Fig. 17 is a flowchart illustrating a quasi-optimal solution calculation process in the process of Fig. 16.

DESCRIPTION OF THE PREFERRED EMBODIMENTS

The embodiments of the present invention are described below with reference to the drawings. In the following discussion, an image pickup apparatus 100 is described as one example of an image processing apparatus.

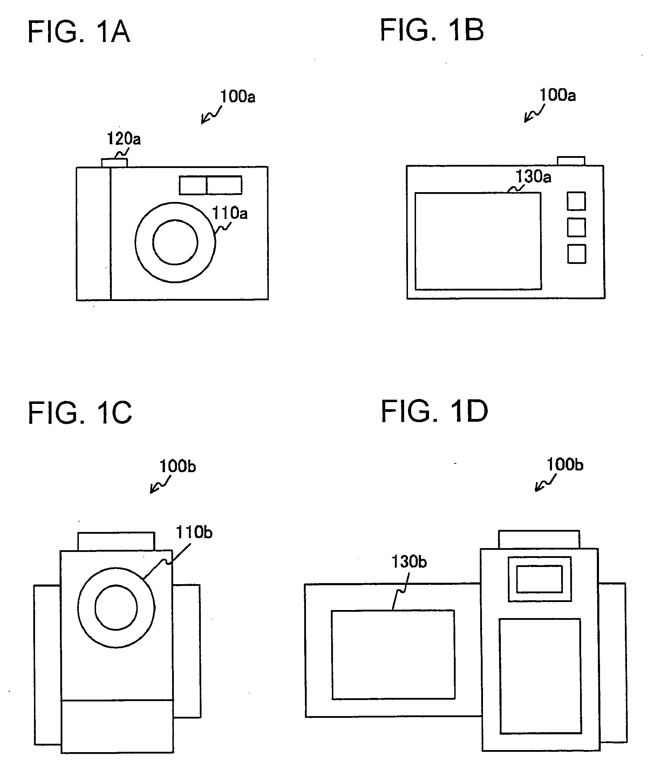

Figs. 1A-1D are external views of image pickup apparatuses 100a and 100b as examples of the image pickup apparatus 100. The image pickup apparatus 100a is intended to mainly pick up still images, and the image pickup apparatus 100b is intended to mainly pick up moving images.

Fig. 1A is a front view of the image pickup apparatus 100a. The image pickup apparatus 100a picks up an image of a subject through a lens unit 110a. When a shutter 120a is pressed, the image pickup apparatus 100a generates a still image. Fig. 1B is a rear view of the image pickup apparatus 100a. The movement of the subject captured through the lens unit 110a is displayed on a display 130a. The generated still image is also displayed on the display 130a.

Fig. 1C is a front view of the image pickup apparatus 100b. The image pickup apparatus 100b picks up an image of a subject through a lens unit 110b. When a recording button (not shown) is pressed, the image pickup apparatus 100b generates a moving image. Fig. 1D is a rear view of the image pickup apparatus 100b. The movement of the subject captured through the lens unit 110b is displayed on a display 130b. The generated moving image is also displayed on the display 130b. The image pickup apparatus 100b has also a function of generating a still image. The generated still image is also displayed on the display 130b.

In accordance with one embodiment of the present invention, part of the still image displayed on one of the display 130a and the display 130b is selected and extracted, and the extracted still image then serves as a template image. In accordance with the embodiment of the present invention, a touchpanel mechanism of directly pressing one of the display 130a and the display 130b is used to select part of the still image. The present invention is not limited to the touchpanel mechanism.

The template image is used when a desired image is searched for from images stored on a storage device (not shown) in the image pickup apparatus 100a and the image pickup apparatus 100b. The images to be searched for, stored on the storage device, are hereinafter referred to as target images. In accordance with one embodiment of the present invention, a target image containing an image similar to a template image is searched for. During search, the template image and the target image are reduced at a reduction ratio matching a vertical height and a horizontal width of the template image, and the target image containing the image similar to the template image is searched for using a genetic algorithm (GA).

The genetic algorithm is a technique that determines an optimal solution through probabilistic data processing by analogy to evolution of organism. More specifically, individuals are randomly extracted, and chromosomes of the same number as the individuals are generated to form an initial population. An adaptivity of each chromosome belonging to the initial population is determined. In accordance with one embodiment of the present invention, the adaptivity is an evaluation value to determine whether an image similar to the template image is contained in the target image.

Subsequent to the determination of the adaptivity, processes of selection, hybridization, and mutation are performed to generate a new chromosome. When the new chromosome is generated, the adaptivity is determined on the new chromosome in the same manner as described above. When a predetermined end condition is satisfied, the above process ends, and the chromosome having a high adaptivity is determined as a quasi-optimal solution. If the quasi-optimal solution is above a predetermined threshold value, the target image is determined as containing the image similar to the template image, and is output as a search result.

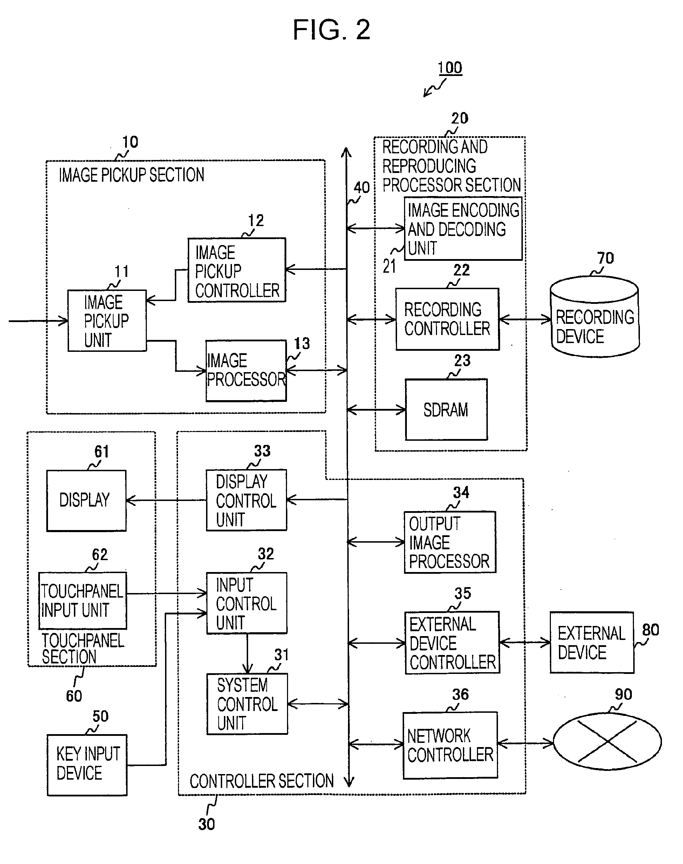

Fig. 2 illustrates the image pickup apparatus 100 in accordance with one embodiment of the present invention. The image pickup apparatus 100 of the embodiment of the present invention includes an image pickup section 10, a recording and reproducing processor section 20, a controller section 30, a bus 40, a key input device 50, a touchpanel section 60, and a recording device 70.

The image pickup section 10 includes an image pickup unit 11, an image pickup controller 12, and an image processor 13. The image pickup unit 11 includes a lens unit for picking up an image of a subject (corresponding to one of the lens unit 110a and the lens unit 110b of Fig. 1), an aperture diaphragm mechanism, a focus adjustment mechanism, and an image pickup element such as a charge coupled device (CCD), and focuses light entering through the lens unit to form the image on a focusing surface of the image pickup element. Upon receiving an image capturing timing signal supplied through the bus 40 from the controller section 30 in response to a shutter operation, the image pickup unit 11 converts the subject image focused on the focusing surface of the image pickup element into an image pickup signal, and supplies the image pickup signal to the image processor 13.

Upon receiving a control signal supplied through the bus 40 from the controller section 30, the image pickup controller 12 generates a control signal to be supplied to the image pickup unit 11. The image pickup controller 12 supplies the generated control signal to the image pickup unit 11, thereby performing zoom control, shutter control, and exposure control processes.

Upon receiving a control signal through the bus 40 from the controller section 30, the image processor 13 performs gamma correction and automatic gain control (AGC) processes while converting the image pickup signal into a digital video signal.

The recording and reproducing processor section 20 includes an image encoding and decoding unit 21, a recording controller 22, and a synchronous dynamic random access memory (SDRAM) 23. The image encoding and decoding unit 21 encodes and multiplexes the video signal supplied through the bus 40 from the image pickup section 10, thereby converting the video signal into compressed data. The image encoding and decoding unit 21 also decodes compressed data into a video signal.

Upon receiving compressed data from the image encoding and decoding unit 21, the recording controller 22 writes the received compressed data onto the recording device 70. The recording controller 22 reads compressed data from the recording device 70 and supplies the read data to the image encoding and decoding unit 21. The recording device 70 may be external or internal to the image pickup apparatus 100. The recording device 70 includes but is not limited to one of a memory card, into which a flash memory is packaged, a magnetic disk such as a hard disk, an optical disk such as DVD, and a magneto-optical (MO) disk. The SDRAM 23 serves as a working area for encoding and decoding processes of the image encoding and decoding unit 21.

The controller section 30 includes a system control unit 31, an input control unit 32, a display control unit 33, an output image processor 34, an external device controller 35, and a network controller 36.

The system control unit 31 generally controls the controller section 30. The key input device 50 connected to the input control unit 32 includes a plurality of keys such as a mode switching key switching between an image pickup mode and another mode such as a playback mode, a zoom adjustment key, an exposure adjustment key, a shutter key (corresponding to the shutter 120a of Fig. 1), and a moving image capturing key. A touchpanel input unit 62 connected to the input control unit 32 receives menu selection and designation of a predetermined area of image data displayed on a display 61.

The input control unit 32 relays an operation signal from the key input device 50 and the touchpanel input unit 62 to the system control unit 31. The system control unit 31 determines whether any key is operated on the key input device 50 and the touchpanel input unit 62 and performs control process in response to the determination results.

The display 61 connected to the display control unit 33 may include a liquid-crystal display (LCD), and under the control of the system control unit 31, displays a video signal supplied from the image pickup section 10 and the video signal read from the recording device 70 via the bus 40. The display 61 corresponds to each of the display 130a and the display 130b of Fig. 1.

The output image processor 34 performs a predetermined modification process on the video data during playback of the video data. The modification process includes color correction on the video data. The process, performed on the video data by the output image processor 34, could be performed by the system control unit 31.

An external device 80 connected to the external device controller 35 includes but is not limited to a personal computer. The external device 80 may be connected to the external device controller 35 using a universal serial bus (USB) cable. Connection means between the external device 80 and the external device controller 35 is not limited to the USB cable. The external device controller 35 controls data exchange between the image pickup apparatus 100 and the external device 80.

The network controller 36 controls data exchange performed between the image pickup apparatus 100 and a network 90. The network 90 includes but is not limited to one of the Internet and a local area network (LAN).

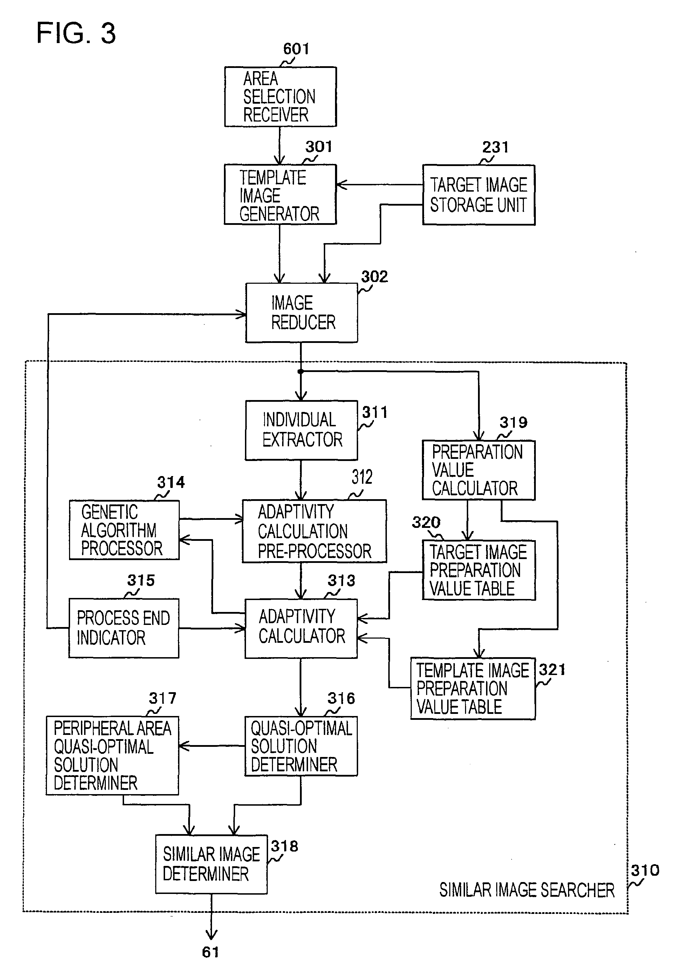

Fig. 3 illustrates an image search function in accordance with one embodiment of the present invention. The image search function includes an area selection receiver 601, a template image generator 301, an image reducer 302, a target image storage unit 231 storing a plurality of template images discussed with reference to Fig. 1, and a similar image searcher 310.

The area selection receiver 601 receives selection of one target image from among a plurality of target images stored on the target image storage unit 231 and selection of an area to be extracted as a template image in the target image.

The template image generator 301 generates the template image by extracting from the target image the area to be extracted as the template image in the target image received by the area selection receiver 601.

The template image generator 301 generates an image that is obtained by expanding or reducing at a predetermined magnification ratio the template image generated as a result of extraction. The expanded or reduced image is used as a template image. The template image generator 301 generates an image that is obtained by rotating by a predetermined angle each of the template image generated as a result of extraction, the expanded image and the reduced image. The image rotated by the predetermined angle is also used as a template image.

The image reducer 302 reduces the template images generated by the template image generator 301 and the target image at a reduction ratio corresponding to the horizontal width and the vertical height of the template image. By reducing the template image and the target image, an amount of calculation involved in a subsequent search process is reduced, and the search process is performed at a high speed. If the template image and the target image are reduced in size, difference and noise in the detail of each image typically not essential in the search process become difficult to detect, and search accuracy is increased.

However, if the template image is already small, further reduction can lead to a degraded accuracy. If the product of the horizontal width and the vertical height of the template image is not more than a predetermined value, accuracy drop is avoided by setting the reduction ratio of the template image and the target image to 1 (with no reduction).

The similar image searcher 310 searches a target image containing an image similar to a template image using a genetic algorithm. The similar image searcher 310 includes an individual extractor 311, an adaptivity calculation preprocessor 312, an adaptivity calculator 313, a genetic algorithm processor 314, a process end indicator 315, a quasi-optimal solution determiner 316, a peripheral area quasi-optimal solution determiner 317, a similar image determiner 318, a preparation value calculator 319, a target image preparation value table 320, and a template image preparation value table 321.

The individual extractor 311 randomly extracts a plurality of individuals from the target image reduced by the image reducer 302, and generates chromosomes of the number equal to the number of individuals. The chromosome has chromosome information based on coordinates on the target image of the individual and a predetermined magnification ratio at the expansion or reduction of the template image. The initial population in the genetic algorithm discussed with reference to Fig. 1 is thus generated.

The coordinates of the individual on the target image and the predetermined magnification ratio at the expansion or reduction of the template image, represented in the chromosome information, is a matching area where matching is performed by overlapping the template image expanded or reduced at the predetermined magnification ratio on the target image. The origin of the template image expanded or reduced at the predetermined magnification ratio is set to a top left corner thereof. With the top left corner located at coordinates of the template image of the chromosome, an area where the target image and the template image overlap each other is the matching area.

The adaptivity calculation pre-processor 312 calculates the absolute value of a difference between the mean value of pixel values in the matching area of the template image and the mean value of pixel values in the matching area of the target image. In accordance with the present embodiment, the pixel value is represented using one of YUV, RGB and HSV color representations, and is luminance [0] or color difference, for example. The adaptivity calculation pre-processor 312 thus calculates the absolute value of the difference between the mean values of the luminances [0] or color differences in the matching areas of the target image and the template image.

If the adaptivity calculation pre-processor 312 determines that the absolute value of the difference between the mean values of pixel values in the matching areas of the target image in the matching area and the template image is above a predetermined threshold, the adaptivity calculator 313 to be discussed later determines that the adaptivity of the chromosome corresponding to the matching area is a sufficiently small number including zero. More specifically, if the adaptivity calculation pre-processor 312 determines that the absolute value of the difference between the mean values of pixel values in the matching areas of the target image and the template image is above the predetermined threshold, it is estimated that the matching area of the target image contains no image similar to the template image, and there is no need for calculating the adaptivity. A value small enough to be excluded from similarity determination process (including zero) is set as the adaptivity calculated by the adaptivity calculator 313.

The adaptivity calculation pre-processor 312 calculates the ratio of squared standard deviations of the pixel values in the matching areas of the target image and the template image, thereby determining the need for the adaptivity calculation. If the adaptivity calculation pre-processor 312 determines that the ratio of squared standard deviations of the pixel values falls out of a predetermined range, the adaptivity calculator 313 sets the adaptivity of the chromosome corresponding to the matching area to a sufficiently small value including zero. More specifically, if the adaptivity calculation pre-processor 312 determines that the ratio of squared standard deviations of the pixel values falls out of the predetermined range, it is estimated that the matching area of the target image contains no image similar to the template image, and there is need for calculating the adaptivity. In this case, the adaptivity set by the adaptivity calculator 313 needs to be a value small enough to be excluded from similarity determination process (including zero).

The adaptivity calculation pre-processor 312 may calculate the absolute value of a difference between pixel values at the center points of the matching areas in the target image and the template image, thereby determining the need for the adaptivity calculation. If it is determined that the absolute value of the difference between pixel values at the center points of the matching areas in the target image and the template image is above a predetermined threshold, the adaptivity calculator 313 sets the adaptivity of the chromosome corresponding to the matching area to a small value including zero. More specifically, if it is determined that the absolute value of the difference between pixel values at the center points of the matching areas in the target image and the template image is above the predetermined threshold, it is estimated that the matching area of the target image contains no image similar to the template image. There is no need for calculating the adaptivity. In this case, the adaptivity set by the adaptivity calculator 313 needs to be a value sufficiently small to be excluded from similarity determination process (including zero).

The adaptivity of the chromosome is thus evaluated based on the absolute value of the difference between the mean values of the pixel values in the matching areas of the target image and the template image, and/or based on the ratio of the squared standard deviations of the pixel values in the matching areas in the target image and the template image, and/or based on the absolute value of the difference between the pixel values at the center points of the matching areas in the target image and the template image. Alternatively, the adaptivity of the chromosome may be evaluated based on all three of these factors. The evaluation of the adaptivity of the chromosome performed by the adaptivity calculation pre-processor 312 will be described later in detail.

The adaptivity calculator 313 calculates the adaptivity of the chromosome generated from the individual extracted by the individual extractor 311. Determination as to whether an image similar to a template image is contained in a target image is performed using the adaptivity. More specifically, if the adaptivity is higher than the predetermined threshold, it is determined that the image similar to the template image is contained in the target image. In accordance with one embodiment of the present invention, a cross-correlation function is used as a function to calculate the adaptivity, and equation (1) shows one example of cross-correlation function:

$$f(X,Y) = \frac{\sum_{i=0}^{w}\sum_{j=0}^{h}\left(Target(X+i,Y+j)-M_{Target}\right)\left(Template(i,j)-M_{Template}\right)}{\sqrt{\sum_{i=0}^{w}\sum_{j=0}^{h}\left(Target(X+i,Y+j)-M_{Target}\right)^2\sum_{i=0}^{w}\sum_{j=0}^{h}\left(Template(i,j)-M_{Template}\right)^2}}$$

Equation (1)

The cross-correlation function represented by equation (1) provides a similarity between the template image in the matching area and the target image in the matching area, and has a value falling within a range of $-1 \le f(X,Y) \le 1$. If the target image fully matches the template image in the matching area, $f(X,Y)=1$. In equation (1), w and h respectively represent the width and height of the template image. Target $(X+i,Y+j)$ represents a pixel value at coordinates $(X+i,Y+j)$ in the target image, Template$(i,j)$ represents a pixel value at coordinates $(i,j)$ in the template image, $M_{target}$ represents the mean value of the pixel values in the matching area of the target image, and $M_{template}$ represents the mean value of the pixel values in the template image.

The adaptivity may be calculated using equation (2), instead of equation (1), as the cross-correlation function to be used by the adaptivity calculator 313. Equation (2) as the cross-correlation function is formulated by interchanging $M_{target}$ and $M_{template}$ with each other in equation (1). The rest of equation (2) remains unchanged from equation (1):

$$f(X,Y) = \frac{\sum_{i=0}^{w}\sum_{j=0}^{h}\left(Target(X+i,Y+j)-M_{Template}\right)\left(Template(i,j)-M_{Target}\right)}{\sqrt{\sum_{i=0}^{w}\sum_{j=0}^{h}\left(Target(X+i,Y+j)-M_{Template}\right)^2\sum_{i=0}^{w}\sum_{j=0}^{h}\left(Template(i,j)-M_{Target}\right)^2}}$$

Equation (2)

Equation (2) is now compared with equation (1). "Target $(X+i,Y+j)$-$M_{target}$" in the cross-correlation function in equation (1) represents only an AC component of a pixel value in the target image with a DC component of the pixel value removed in the target image. "Template $(i,j)$-$M_{template}$" represents only an AC component of the pixel value in the template image with a DC component of the pixel in the template image removed in the template image. Since the numerator is the product of the AC component of the pixel value in the target image and the AC component of the pixel value in the template image in equation (1), the result reflects no DC component. If the target image is matched against the template image, $f(X,Y)$ can result in a high value even with no similarity therebetween.

"Target $(X+i,Y+j)$-$M_{template}$" in the cross-correlation function of equation (2) is the pixel value in the target image with the DC component of the pixel value in the template image removed therefrom, and "Template $(i,j)$-$M_{target}$" is the pixel value in the template image with the DC component of the pixel value in the target image removed therefrom. If there is a difference between the DC component of the pixel value in the target image and the DC component of the pixel value in the template image, there remains not only an AC component but also a DC component in each of Target $(X+1,Y+1)$-$M_{template}$ and Template $(i,j)$-$M_{target}$. In other words, the result also reflects the DC component. The adaptivity calculated using equation (2) provides a higher accuracy search than using equation (1).

The adaptivity calculator 313 uses one of equations (1) and (2) to calculate the adaptivity. Equation (3) may also be used:

$$F(X,Y) = \frac{\sqrt{f\_Y(X,Y)^2 + f\_U(X,Y)^2 + f\_V(X,Y)^2}}{\sqrt{3}}$$

Equation (3)

Equation (3) is used to calculate the adaptivity when YUV is used as the pixel value. $f\_Y(X,Y)$ represents $f(X,Y)$ in one of equations (1) and (2) with Y component (luminance) used for the pixel value. $f\_U(X,Y)$ represents $f(X,Y)$ in one of equations (1) and (2) with U component (difference between luminance signal and blue component) used for the pixel value. $f\_V(X,Y)$ represents $f(X,Y)$ in one of equations (1) and (2) with V component (difference between luminance signal and red component) used for the pixel value.

In equation (3), squares of $f\_Y(X,Y)$, $f\_U(X,Y)$ and $f\_V(X,Y)$ are summed, and square root of the sum is determined. The square root of the sum is divided by square root of 3 for normalization. In equation (3), YUV are summed at ratio of 1:1:1. Alternatively, another ratio may be employed to stress any one component of YUV.

Equation (3) provides the result that reflects not only the Y component (luminance) but also the U component (difference between the luminance signal and the blue component) and the V component (difference between the luminance signal and the red component). Highly accurate matching is thus performed.

f(X,Y) discussed with reference to equations (1) through (3) falls within a range of -1 to 1. The adaptivity calculator 313 may provide as the calculation result a adaptivity "f'(X,Y)=(f(X,Y)+1)/2" having a range of 0 to 1.

The genetic algorithm processor 314 performs the selection, hybridization, and mutation processes onto the chromosome having the adaptivity calculated by the adaptivity calculator 313, thereby a chromosome having new chromosome information. In the selection process, chromosomes of a predetermined number are selected according to the adaptivity calculated by the adaptivity calculator 313. In the hybridization process, chromosomes selected in the selection are paired, and part of the chromosome information of the pair chromosomes is interchanged. In the mutation process, part of the chromosome information of the chromosome is changed with a predetermined probability.

Since the selection, the hybridization, and the mutation processes are performed with a predetermined probability, the population becomes a mixture of chromosomes having no change in the chromosome information and chromosomes having new chromosome information subsequent to the process of the genetic algorithm processor 314. After the genetic algorithm processor 314 performs the selection, the hybridization, and the mutation processes, the processes of the adaptivity calculation pre-processor 312 and the adaptivity calculator 313 are performed again.

In predetermined condition, the process end indicator 315 issues a process end command to end the processes repeatedly performed by the adaptivity calculation pre-processor 312, the adaptivity calculator 313, and the genetic algorithm processor 314. The predetermined condition may be reached after 50 generations of processes performed by the adaptivity calculation pre-processor 312, the adaptivity calculator 313 and the genetic algorithm processor 314, and the process end command may be issued, but the present invention is not limited to this condition.

Upon receiving the process end command from the process end indicator 315, the adaptivity calculator 313 supplies the quasi-optimal solution determiner 316 with a plurality of adaptivities calculated last. The quasi-optimal solution determiner 316 determines as a quasi-optimal solution the chromosome corresponding to the highest adaptivity from among the plurality of adaptivities supplied from the adaptivity calculator 313.

The peripheral area quasi-optimal solution determiner 317 matches the target image against the template image in all of a predetermined area surrounding the matching area corresponding to the chromosome determined as the quasi-optimal solution by the quasi-optimal solution determiner 316. The peripheral area quasi-optimal solution determiner 317 thus calculates the adaptivities using equations (1) through (3) in each peripheral matching area. The peripheral area quasi-optimal solution determiner 317 determines as the quasi-optimal solution the chromosome having the highest adaptivity from among the calculated adaptivities.

The broadness of the predetermined area surrounding the matching area corresponding to the chromosome determined as the quasi-optimal solution by the quasi-optimal solution determiner 316 may be determined as a predetermined broadness such as from the boundary of the matching area to a predetermined pixel. The peripheral area quasi-optimal solution determiner 317 matches the target image against the template image in the predetermined area surrounding the matching area corresponding to the chromosome determined as the quasi-optimal solution. This is because if the target image is matched against the template image using the genetic algorithm, an optimum area for matching the target image against the template image cannot always be found.

The similar image determiner 318 determines whether a higher one of the highest adaptivity determined by the quasi-optimal solution determiner 316 and the adaptivity calculated by the peripheral area quasi-optimal solution determiner 317 is above a predetermined threshold. If the similar image determiner 318 determines that the higher adaptivity is above the predetermined adaptivity, the search result that the image similar to the template image is contained in the target image is output.

The preparation value calculator 319 calculates a preparation value that is obtained by summing pixel values from the origin of the template image and the target image reduced by the image reducer 302 to any coordinates. The calculation of the preparation value is performed at all coordinates in the reduced template image and the reduced target image. Let ii(X,Y) represent the preparation value and i(X',Y') represent a pixel value at (X',Y') in the target image, and the preparation value ii(X,Y) is expressed by the following equation (4):

$$ii(X,Y) = \sum_{X' \leq X,\, Y' \leq Y} i(X',Y')$$

Equation (4)

Equation (4) sums the pixel values at each coordinate within an area defined by $0 \leq X' \leq X$, and $0 \leq Y' \leq Y$ in X'Y' space. In the X'Y' space, the top left corner of the target image serves as the origin, and the leftward direction serves as a positive direction of X' coordinate and the downward direction serves as a positive direction of Y' coordinate. An intermediate value s(X,Y) is considered to calculate the preparation value. Equation (5) shows the relationship of the preparation value ii(X,Y), the pixel value i(X',Y') at (X',Y') in the target image and the intermediate value s(X,Y) wherein the values of s(X,-1) and ii(-1,Y) required to calculate ii(0,0) are zero, respectively:

$$S(X,Y) = S(X,Y-1) + \dot{i}(X,Y)$$

$$\ddot{i}\dot{i}(X,Y) = \ddot{i}\dot{i}(X-1,Y) + S(X,Y) \qquad \text{Equations (5)}$$

The preparation value calculator 319 calculates the preparation value at each of the coordinates in the target image using equations (4) and (5), and the calculation result is then stored onto the target image preparation value table 320. In the same way as described above, the preparation value calculator 319 calculates the preparation value at each of the coordinates in the template image, and the calculation result is then stored onto the template image preparation value table 321.

Similarly, a preparation value iii(X,Y) that is a sum of squared pixel values at each coordinate is also calculated at each of the coordinates in each of the target image and the template image. The calculation results are stored onto the target image preparation value table 320 and the template image preparation value table 321, respectively. The preparation value iii(X,Y) is expressed by the following equation (6):

$$\ddot{i}\dot{i}(X,Y) = \sum_{X' \le X, \, Y' \le Y} i(X',Y')^2 \qquad \text{Equation (6)}$$

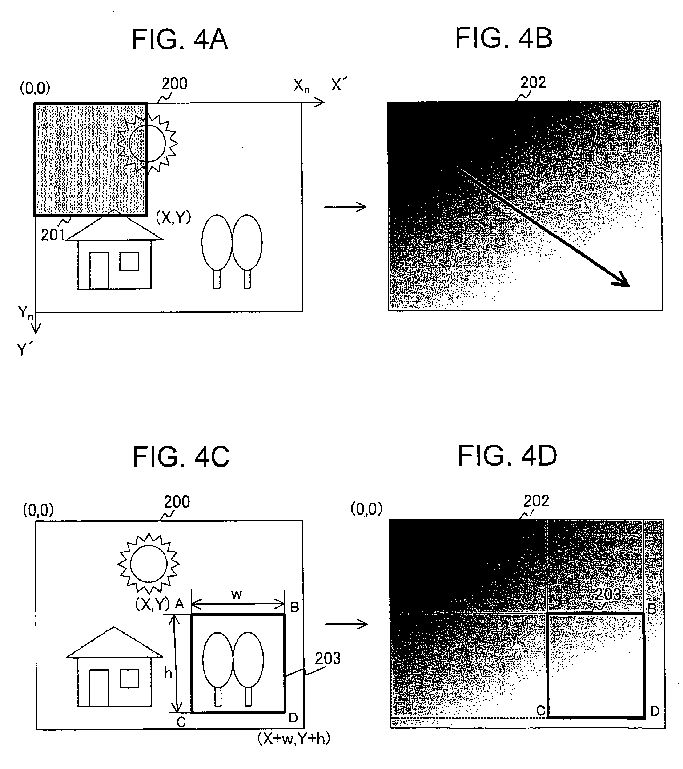

The adaptivity calculator 313 calculates equations (1) through (3) using the above-described preparation values. How to use the preparation values in the calculation of equations (1) through (3) is described below with reference to Figs. 4A-4D.

Figs. 4A-4D illustrate the preparation values in accordance with one embodiment of the present invention. Fig. 4A illustrates a target image 200. The preparation value is calculated by summing the pixel values in the target image within an area 201 defined by coordinates (0,0) and (X,Y). (X,Y) takes ranges $0 \le X \le X_n$ and $0 \le Y \le Y_n$, and the preparation value is determined at all (X,Y) within these ranges.

If the pixel value is luminance, the more the pixel values are calculated, the larger the preparation value becomes. The image thus becomes lighter as it goes downward rightly. A gradation image 202 of Fig. 4B results, for example.

When the adaptivity in an area 203 in the target image 200 is calculated, equations (1) through (3) discussed with reference to Fig. 3 are used. The application of the preparation value in equation (1) is described below with reference to Figs. 4C and 4D when the adaptivity of the area 203 is calculated.

Let (X,Y) represent the coordinates of point A, w represent the length between points A and B, and h represent the length between A and C as shown in Fig. 4C, and the adaptivity of the area 203 is determined using equation (1). In equation (1), first section of the denominator related to the target image is expanded as equation (7):

$$\sum_{i=0}^{w} \sum_{j=0}^{h} \left( Target(X+i, Y+j) - M_{Target} \right)^2$$

$$= \underbrace{\sum_{i=0}^{w} \sum_{j=0}^{h} Target(X+i, Y+j)^2}_{\text{Term a1}} - \underbrace{2M_{Target} \sum_{i=0}^{w} \sum_{j=0}^{h} Target(X+i, Y+j)}_{\text{Term a2}} + \underbrace{M_{Target}^2 \sum_{i=0}^{w} \sum_{j=0}^{h} 1}_{\text{Term a3}}$$

$$\text{Equation (7)}$$

In equation (7), term a1 is a sum of squared pixel values in the area 203 defined by point A at coordinates (X,Y) and point D at coordinates (X+w,Y+h). The term 1a is calculated using the preparation value iii(X,Y) in the target image. In other words, the term a1 is the sum of the squared values in the area 203 in the gradation image 202 representing the preparation value of Fig. 4D. The term a1 is determined from iii(A)+iii(D)-iii(B)-iii(C) using iii(X,Y) in the target image discussed with reference to Fig. 3. Here, iii(A) represents the preparation value iii(X,Y) at the coordinates of point A, and the same is true of the other formats.

Term a2 is a product of $2M_{target}$ and the sum of the pixel values in the area 203 defined by the point A at coordinates (X,Y) and the point D at coordinates (X+w,Y+h). The term a2 can be calculated using the preparation value ii(X,Y) in the target image. Like the term a1, the term a2 is determined from $2M_{target}$ {ii (A) +ii (D) -ii (B) -ii (C) }. Term a3 is $M_{target}$wh. Equation relating to the target image out of the denominator of equation 1 is determined using ii(X,Y) and iii(X,Y) in the target image. Equation relating to the template image out of the denominator of equation 1 is determined in a similar way. Here, ii(A) represents a preparation value ii(X,Y) at the coordinates of the point A, and the same is true of the other formats.

Equation (8) is an expanded form of the numerator of equation (1).

$$\sum_{i=0}^{w}\sum_{j=0}^{h}\left(Target(X+i,Y+j)-M_{Target}\right)\left(Template(i,j)-M_{Template}\right)$$

$$=\underbrace{\sum_{i=0}^{w}\sum_{j=0}^{h}Target(X+i,Y+j)Template(i,j)}\qquad \text{Term b1}$$

$$\underbrace{-M_{Target}\sum_{i=0}^{w}\sum_{j=0}^{h}Template(i,j)}_{\text{Term b2}}\underbrace{-M_{Template}\sum_{i=0}^{w}\sum_{j=0}^{h}Target(X+i,Y+j)}_{\text{Term b3}}\underbrace{+M_{Target}M_{Template}\sum_{i=0}^{w}\sum_{j=0}^{h}1}_{\text{Term b3}}$$

$$\text{Equation (8)}$$

Term b1 in equation (8) cannot be calculated using the preparation value. Term b2 is determined from $M_{target}$ {ii(A)+ii(D)-ii(B)-ii(C)} using the preparation value ii(X,Y) in the template image as in equation (7). Term b3 is determined from $M_{template}$ {ii(A)+ii(D)-ii(B)-ii(C)} using the preparation value ii(X,Y) in the target image. Term b4 is expressed as $M_{target}M_{template}$Wh. From the above discussion, the numerator of equation (1) is determined using ii(X,Y) and iii(X,Y) in the target image and the template image.

The use of the preparation value in equation (1) has been discussed. Similarly, the preparation value is used in each of equations (2) and (3). Since an amount of calculation is reduced by calculating equations (1) through (3) using the preparation value, high speed searching is performed.

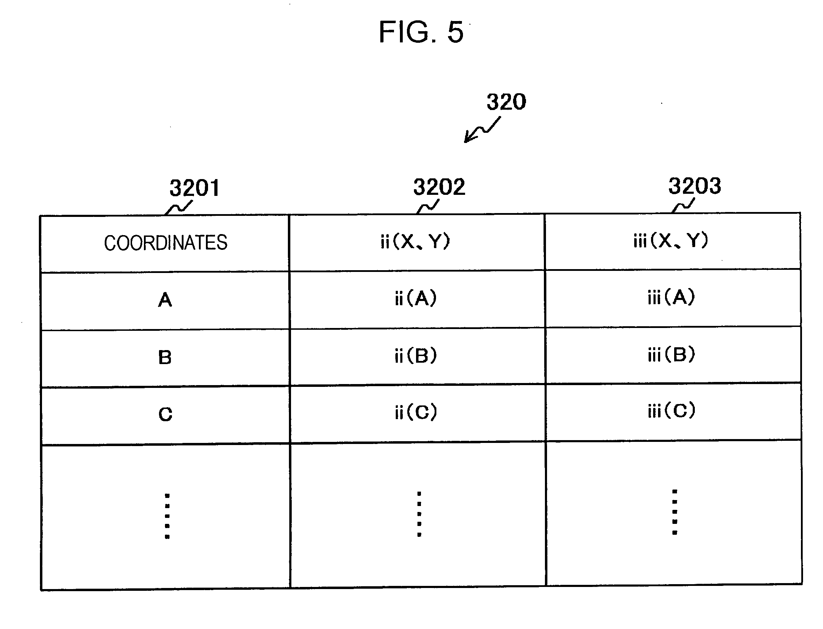

Fig. 5 illustrates the target image preparation value table 320 in accordance with one embodiment of the present invention. The target image preparation value table 320 includes coordinates 3201, preparation values ii(X,Y) 3202, and preparation values iii(X,Y) 3203.

The coordinates 3201 include all coordinates of the template image, and the target image preparation value table 320 includes the preparation values ii(X,Y) 3202 and the preparation values iii(X,Y) 3203 corresponding to the coordinates. Here, ii(A) and iii(A) respectively represent the preparation value ii(X,Y) and the preparation value iii(X,Y) at the coordinates of point A. The same is true of other formats. The adaptivity calculator 313 calculates the adaptivity of the chromosome by referencing the target image preparation value table 320. The template image preparation value table 321 has a structure similar to the target image preparation value table 320.

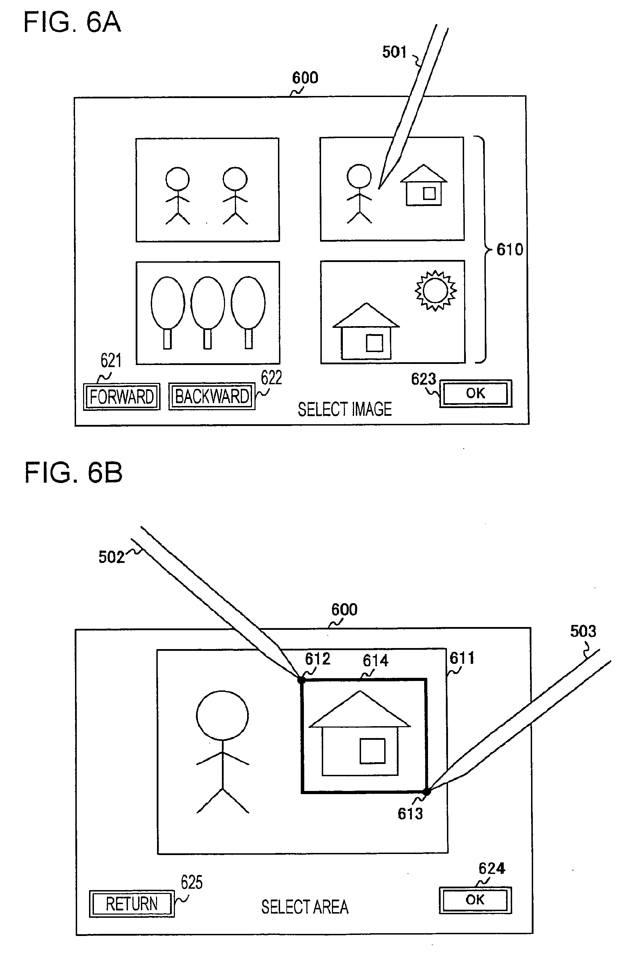

Figs. 6A and 6B illustrate the area of the template image in accordance with one embodiment of the present invention. As shown in Fig. 6A, the number of template images that can be displayed at a time on a display screen 600 is four in accordance with one embodiment of the present invention. To display another template image on the display screen 600, a "forward" button 621 or a "backward" button 622 may be selected using a stylus 501. In this way, another template image is displayed. In accordance with one embodiment of the present invention, the display screen 600 is directly pressed in the touchpanel mechanism, but the present invention is not limited to the touchpanel mechanism.

A user selects a desired template image with the stylus 501 with the desired image displayed on the display screen 600, and then selects an OK button 623. As shown in Fig. 6B, a selected target image 611 is now displayed on the display screen 600.

When the target image 611 is displayed on the display screen 600 as shown in Fig. 6B, an area in the template image is then selected. An image contained in the selected area becomes an template image. To select the area in the target image, a point 613 is selected using a stylus 503 after selecting a point 612 with a stylus 502. When the point 613 is selected using the stylus 502, an area 614 having a diagonal line connecting the point 612 and the point 613 is displayed.

If an OK button 624 is selected with the area 614 displayed, a template image is generated. To select another area with the area 614 displayed, a return button 625 is selected and an area in the target image 611 is selected.

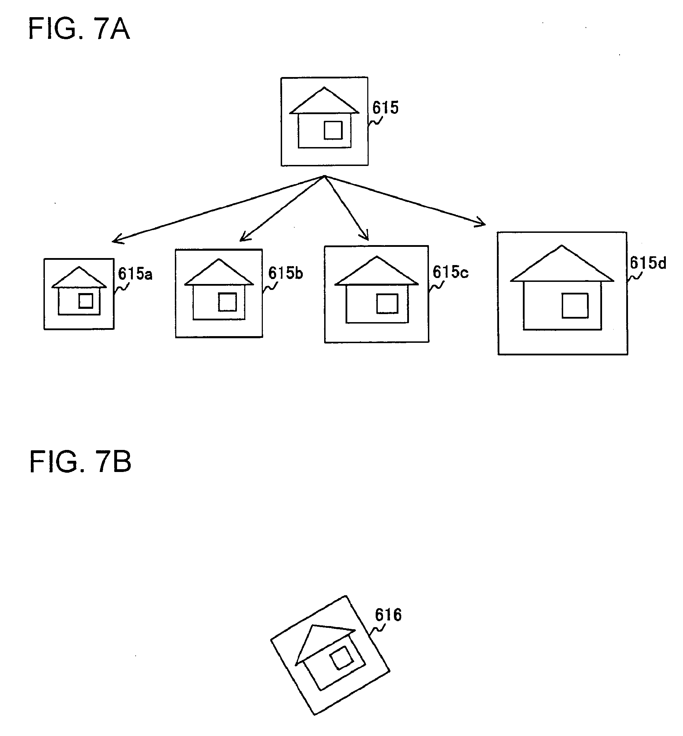

Figs. 7A and 7B illustrate template image data generated in accordance with one embodiment of the present invention. When the area in the template image is selected, the template image generator 301 extracts the selected area of the target image. As shown in Fig. 7A, a template images 615 is generated.

The template image generator 301 generates template images 615a through 615d by expanding or reducing the template image 615. The template images 615a through 615d are respectively generated by expanding the template image 615 by 1.21, 1.1, 1.0, 0.909, and 0.826 times. As shown in Fig. 7A, the number of pieces of template image data other than the template image 615 is four. The present invention is not limited to four template images, and any number of template images may be used.

Number sequences 1.21, 1.1, 1.0, 0.909, and 0.826 are respectively considered as $(1.1)^2$, $(1.1)^1$, $(1.1)^0$, $(1.1)^{-1}$, and $(1.1)^{-2}$, namely, geometric sequences having the common ratio of 1.1. The use of a large common ratio increases the possibility of search miss when image search is performed using the template image. The use of a small common ratio increases an amount of calculation when image search is performed using the template image. The common ratio is preferably but not limited to 1.1 or so. A common ratio of 1.09 or 1.2 is also acceptable.

Not only the images obtained by expanding or reducing the template image 615 but also a template image 616 obtained by rotating the template image 615 as shown in Fig. 7B may be used as the template image.

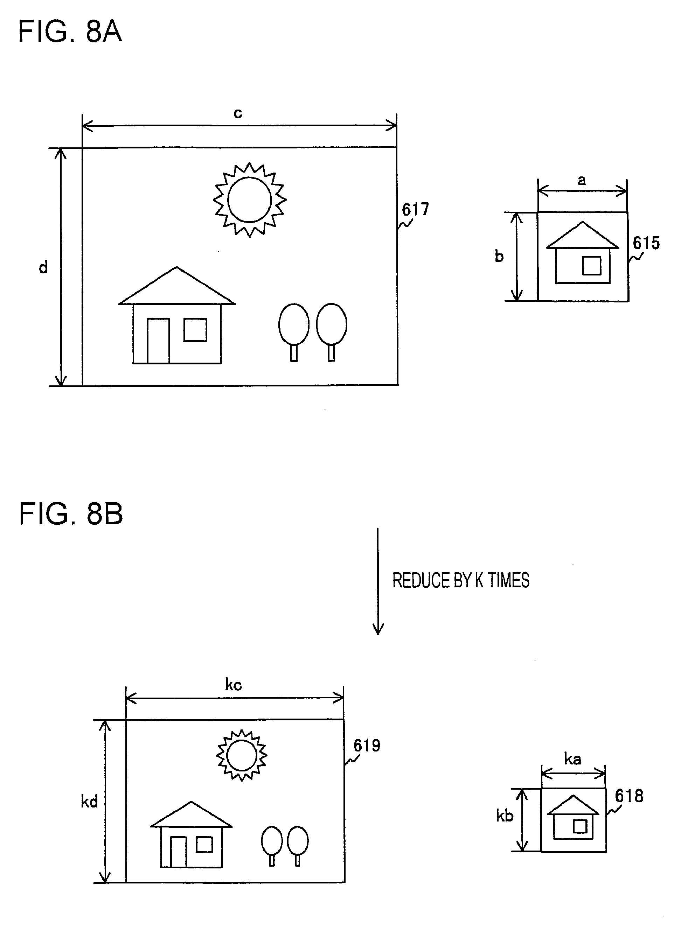

Figs. 8A and 8B illustrate a target image 617 and a template image 615, each reduced by the image reducer 302, in accordance with one embodiment of the present invention. Fig. 8A illustrates the target image 617 and the template image 615 before being reduced by the image reducer 302.

The target image 617 and the template image 615 are reduced at a reduction ratio k responsive to the horizontal width and the vertical height of the template image. The reduction ratio k may be the one represented by the following equation (9) wherein a and b respectively represent the horizontal width and the vertical height of the template image 615:

$$\text{Reduction ratio k} = \begin{cases} 1 & (a \times b \leq 850) \\ \sqrt{\dfrac{850}{a \times b}} & (a \times b > 850) \end{cases} \qquad \text{Equation (9)}$$

Fig. 8B illustrates a target image and a template image, each reduced by the image reducer 302. When reduced by the image reducer 302, the width of the target image changes from c to kc, and the vertical height of the target image changes from d to kd. When reduced by the image reducer 302, the horizontal width of the template image changes from a to ka, and the vertical height of the template image changes from b to kb.

With the target image and the template image reduced, the amount of calculation involved in the search process to be discussed later is decreased. The search process is thus performed at a high speed. With the target image and the template image reduced, difference and noise in the detail of each image typically not essential in the search process becomes difficult to detect, and search accuracy is increased.

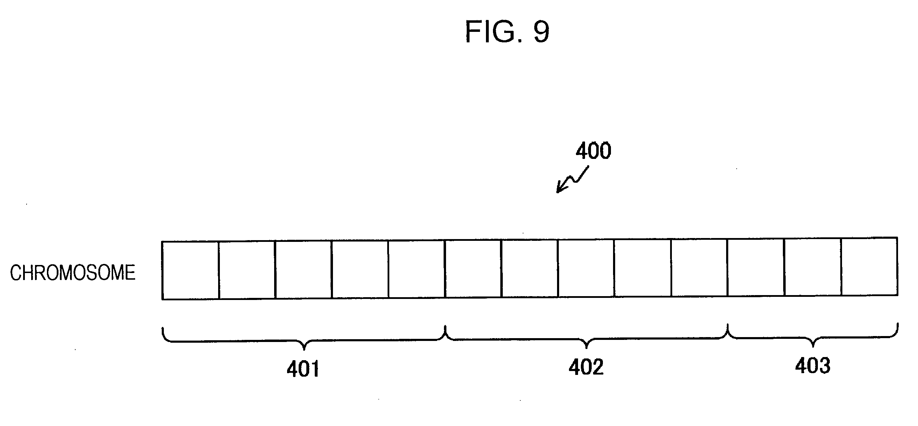

Fig. 9 illustrates chromosome information 400 of a chromosome in accordance with one embodiment of the present invention. The chromosome information 400 of the present embodiment includes, as coordinates on the target image of the individual extracted by the individual extractor 311, an X coordinate 401 of a position where the target image and the template image are matched against each other, a Y coordinate 402 of a position where the target image and the template image are matched against each other, and a magnification ratio 403 of the template image that is matched against the target image.

The X coordinate 401 and the Y coordinate 402 are converted into gray code, and coded into the chromosome information. Rather than being directly coded into the chromosome information, the magnification ratio 403 is indexed, converted into gray code and then coded into the chromosome information.

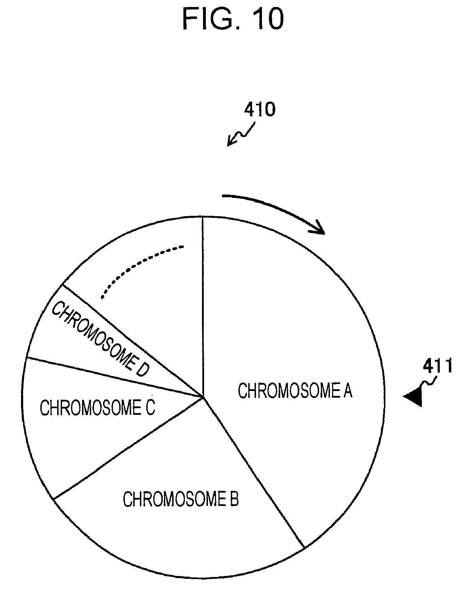

Fig. 10 illustrates a roulette 410 for use in selection of a genetic algorithm in accordance with one embodiment of the present invention. In the selection process, a predetermined number of chromosomes with the adaptivity thereof calculated by the adaptivity calculator 313 as previously discussed with reference to Fig. 3 are selected. The area of the roulette 410 is partitioned into sectors of the number equal to the number of chromosomes. The partitioning process is performed so that the area in each sector in the roulette 410 is proportional to a adaptivity f'(X,Y) calculated by the adaptivity calculator 313.

For example, the individual extractor 311 may extract n individuals and n chromosomes may be generated. The roulette 410 is partitioned into n sectors. The adaptivities of chromosome A, chromosome B, chromosome D, ... are high to low in that order. The areas of the sectors in the roulette 410 are shown in Fig. 10 because the higher the adaptivity the larger the area of the chromosome.

The roulette 410 is rotated in the direction represented by the arrow in Fig. 10. When the roulette 410 stops, the chromosome a selection point 411 points to is a chromosome remaining in the selection. By repeating this process by n times, n chromosomes are selected from the n chromosomes. Since the chromosome having the larger sector area in the roulette 410 has a higher probability of selection, the chromosome having a higher adaptivity is more likely to be selected after the selection using the roulette 410.

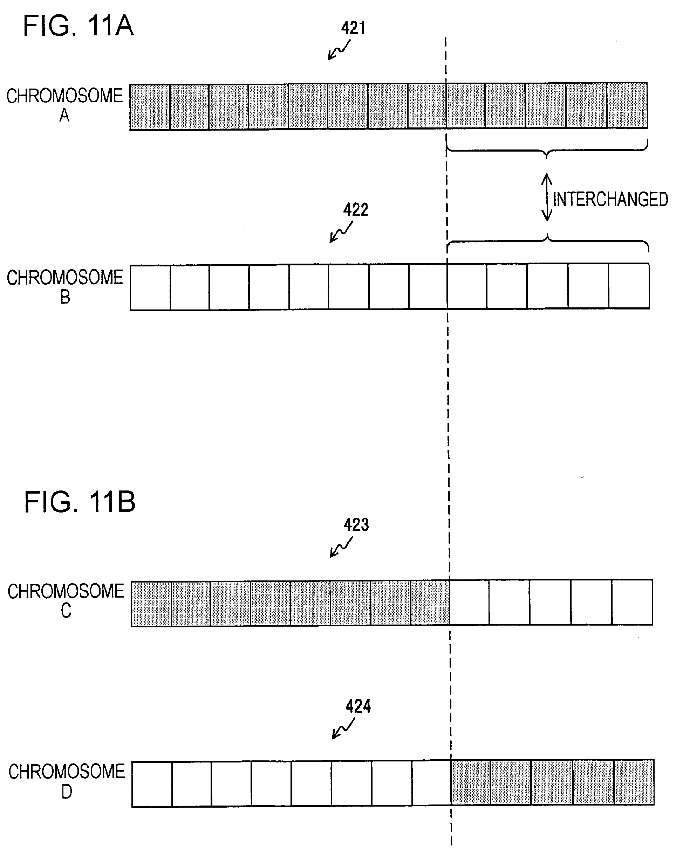

Figs. 11A and 11B illustrate a hybridization process of the genetic algorithm in accordance with one embodiment of the present invention. As shown in Fig. 3, in the above-described selection process, the selected chromosomes are paired and part of the chromosome information is interchanged between the paired chromosomes.

Fig. 11A illustrates a chromosome A421 and a chromosome B422 in pair. Predetermined locations are selected in the chromosome A421 and the chromosome B422. The locations are indicated by a broken line in Fig. 11A. The chromosome information on the right side of the broken line is interchanged. In the interchanging process, a chromosome C423 and a chromosome D424 are generated as shown in Fig. 11B.

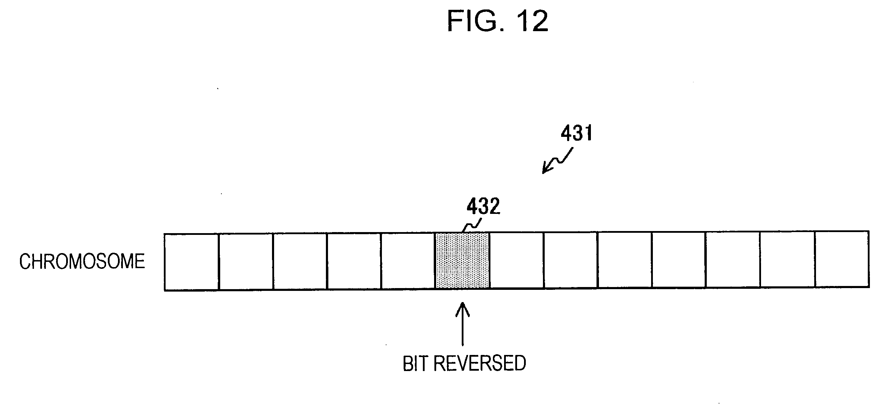

Fig. 12 illustrates a mutation process in the genetic algorithm in accordance with one embodiment of the present invention. In the mutation process, as previously discussed with reference to Fig. 3, the value of a portion of the chromosome information is changed in the chromosome with a predetermined probability. The predetermined probability is an extremely low probability. Chromosome information at a random location 432 in the chromosome having chromosome information 431 selected with the probability is bit reversed. In this way, a new chromosome is generated.

The selection, hybridization, and mutation processes discussed with reference to Figs. 10 through 12 are repeated, thereby causing a chromosome having a high adaptivity to be remained more. When the predetermined condition is reached, the process is terminated. An image similar to the template image is more likely to be contained in a matching area corresponding to the chromosome having the highest adaptivity. If the highest adaptivity is above a predetermined threshold, it is estimated that the image similar to the template image is contained in the target image, and the similar image is then output.

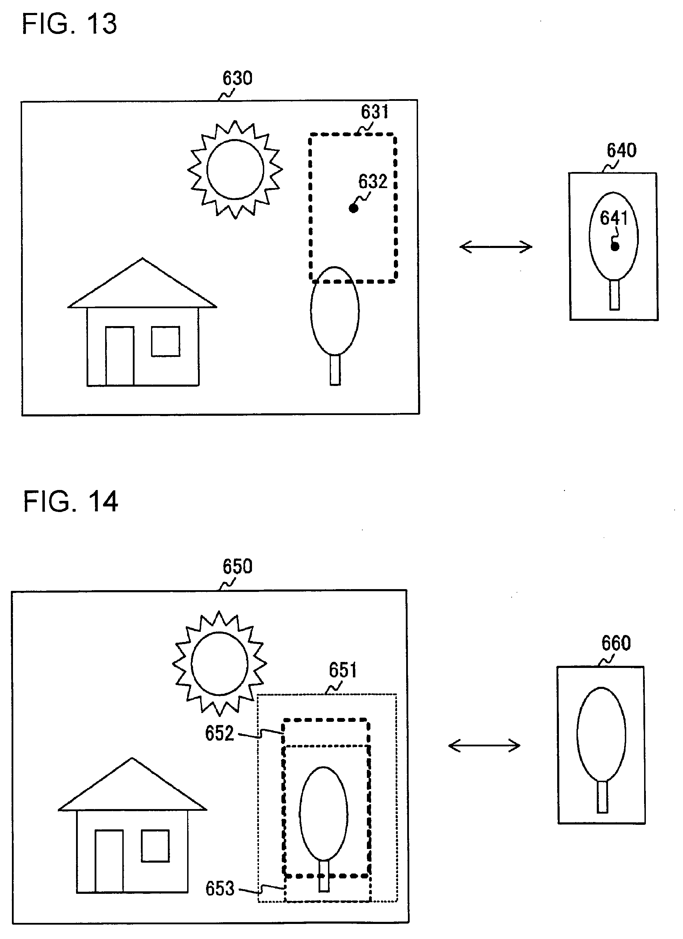

Fig. 13 illustrates a process of the adaptivity calculation pre-processor 312 in accordance with one embodiment of the present invention. When an area similar to a template image 640 is searched for in the target image, an area 631 corresponding to a predetermined chromosome of Fig. 13 is definitely not a similar area. The calculation of the adaptivity of the chromosome performed by the adaptivity calculator 313 interferes with high-speed image search process.

In accordance with one embodiment of the present invention, the calculation of the adaptivity using equations (1) through (3) needs to be skipped in the matching area such as the matching area 631 in order to reduce the amount of calculation in the adaptivity calculator 313. As previously discussed with reference to Fig. 3, in accordance with one embodiment of the present invention, the adaptivity calculation pre-processor 312 evaluates the adaptivity of the chromosome based on the absolute value of the difference between the mean values of the pixel values in the matching areas of the target image and the template image, based on the ratio of the squared standard deviations of the pixel values in the matching areas in the target image and the template image, and based on the absolute value of the difference between the pixel values at the center points of the matching areas in the target image and the template image. If the evaluation result of the adaptivity is not good, a value small enough to be excluded from similarity determination process is set as an adaptivity (including zero) without the adaptivity calculator 313 calculating the adaptivity using equations (1) through (3). A specific example of the evaluation of the adaptivity is described below.

The pixel value may be represented by YUV. Equations (10) represent a condition on the absolute value of the difference between the mean values of the pixel values in the matching areas in the target image and the template image to omit adaptivity calculation of the chromosome as much as possible. Let $M^Y_{target}$, $M^U_{target}$, and $M^V_{target}$ respectively represent mean values of a Y component (luminance), a U component (difference between a luminance signal and a blue component), and a V component (difference between a luminance signal and a red component) in the target image. Let $M^Y_{template}$, $M^U_{template}$, and $M^V_{template}$ represent mean values of a Y component (luminance), a U component (difference between a luminance signal and a blue component), and a V component (difference between a luminance signal and a red component) in the template image:

$$\left| M^{Y}{}_{\text{target}} - M^{Y}{}_{\text{template}} \right| > 90$$

$$\left| M^{U}{}_{\text{target}} - M^{U}{}_{\text{template}} \right| > 20$$

$$\left| M^{V}{}_{\text{target}} - M^{V}{}_{\text{template}} \right| > 20$$

$$\text{Equations (10)}$$

If the absolute value of the difference between the mean values of the pixel values in the matching areas in the target image and the template image calculated by the adaptivity calculation pre-processor 312 satisfies all of equations (10), the adaptivity calculator 313 sets a value small enough to be excluded from similarity determination as an adaptivity (including zero).

When the pixel value is represented by YUV, equations (11) represent a condition on the ratio of the squared standard deviations of the pixels in the matching areas in the target image and the template image to omit adaptivity calculation of the chromosome as much as possible. Let $\sigma^{U}{}_{\text{target}}$ and $\sigma^{V}{}_{\text{target}}$ represent mean values of a U component (difference between a luminance signal and a blue component), and a V component (difference between the luminance signal and a red component) in the target image. Let $\sigma^{U}{}_{\text{template}}$ and $\sigma^{V}{}_{\text{template}}$ represent mean values of a U component (difference between a luminance signal and a blue component), and a V component (difference between the luminance signal and a red component) in the template image.

$$0.01 > \frac{\left(\sigma^{U}{}_{\text{target}}\right)^{2}}{\left(\sigma^{U}{}_{\text{template}}\right)^{2}}, \text{or} \quad 100 < \frac{\left(\sigma^{U}{}_{\text{target}}\right)^{2}}{\left(\sigma^{U}{}_{\text{template}}\right)^{2}}$$

$$0.01 > \frac{\left(\sigma^{V}{}_{\text{target}}\right)^{2}}{\left(\sigma^{V}{}_{\text{template}}\right)^{2}}, \text{or} \quad 100 < \frac{\left(\sigma^{V}{}_{\text{target}}\right)^{2}}{\left(\sigma^{V}{}_{\text{template}}\right)^{2}}$$

$$\text{Equations (11)}$$

Standard deviation $\sigma^{Y}{}_{\text{target}}$ of the Y component (luminance) in the target image is expressed as in equation (12) if the mean value $M^{Y}{}_{\text{target}}$ of the Y component (luminance) in the target image is used:

$$\left(\sigma^{Y}{}_{\text{target}}\right)^{2} = \sum \left(M^{Y}{}_{\text{target}}\right)^{2} - \left(\sum M^{Y}{}_{\text{target}}\right)^{2}$$

$$\text{Equation (12)}$$

If the ratio of the squared standard deviations of the pixel values in the matching areas in the target image and the template image calculated by the adaptivity calculation pre-processor 312 satisfies all equations (11), the adaptivity calculator 313 sets a value small enough to be excluded from similarity determination process as an adaptivity (including zero).

When the pixel value is represented by YUV, equations (13) represent a condition on the absolute value of the difference between the pixel values at the center points in the matching areas in the target image and the template image to omit adaptivity calculation of the chromosome as much as possible. Let $C^{U}{}_{\text{target}}$ and $C^{V}{}_{\text{target}}$ represent a U component (difference between a luminance signal and a blue component), and a V component (difference between the luminance signal and a red component) at the center point of the matching area in the target image. Let $C^{U}{}_{\text{template}}$ and $C^{V}{}_{\text{template}}$ represent a U component (difference between a luminance signal and a blue component), and a V component (difference between the luminance signal and a red component) at the center point of the matching area in the template image.

$$\left| C^{U}{}_{\text{target}} - C^{U}{}_{\text{template}} \right| > 30$$

$$\left| C^{V}{}_{\text{target}} - C^{V}{}_{\text{template}} \right| > 30$$

$$\text{Equations (13)}$$

If the absolute value of the difference between the pixel values at the center points in the matching areas in the target image and the template image calculated by the adaptivity calculation pre-processor 312 satisfies all conditions of equations (13), the adaptivity calculator 313 sets a value small enough to be excluded from similarity determination process as an adaptivity (including zero).

Adaptivity is thus evaluated using equations (10), (11) and (13). If an evaluation result is poor, the adaptivity calculator 313 sets a value small enough to be excluded from similarity determination process as an adaptivity (including zero) without using f(X,Y) for adaptivity calculation. Since f(X,Y) is not used in the calculation of adaptivity, the target image containing the image similar to the template image is searched at a high speed.

Fig. 14 illustrates a peripheral area to the matching area corresponding to the quasi-optimal solution determined according to the genetic algorithm in accordance with one embodiment of the present invention. As shown in Fig. 14, a template image 660 and an image 652 in the matching area corresponding to the chromosome as the quasi-optimal solution are slightly shifted in position from each other. An image 653 with the matching area shifted is more similar to the template image 660 than the image 652.

In accordance with the genetic algorithm, no entire area of the template image is evaluated in detail, and there is a high possibility that a better quasi-optimal solution is present in the peripheral area of the quasi-optimal solution determined in accordance with the genetic algorithm. In accordance with one embodiment of the present invention, after the quasi-optimal solution is determined, adaptivity is further determined in the peripheral area surrounding the matching area corresponding to the quasi-optimal solution with the matching area shifted. The peripheral area quasi-optimal solution determiner 317 determines the adaptivity using equations (1) through (3) discussed with reference to Fig. 3. The peripheral area surrounding the matching area may be predetermined to cover from the boundary of the matching area to a predetermined number of pixels away from the boundary, for example.

If the highest adaptivity from among the adaptivities in the peripheral area determined by the peripheral area quasi-optimal solution determiner 317 is higher than the adaptivity determined to be the quasi-optimal solution by the quasi-optimal solution determiner 316, the highest adaptivity from among the adaptivities in the peripheral area determined by the peripheral area quasi-optimal solution determiner 317 is set to be a new adaptivity. That determination is performed by the similar image determiner 318. If the adaptivity determined to be the quasi-optimal solution is above a predetermined threshold, it is estimated that the target image contains the image similar to the template image.

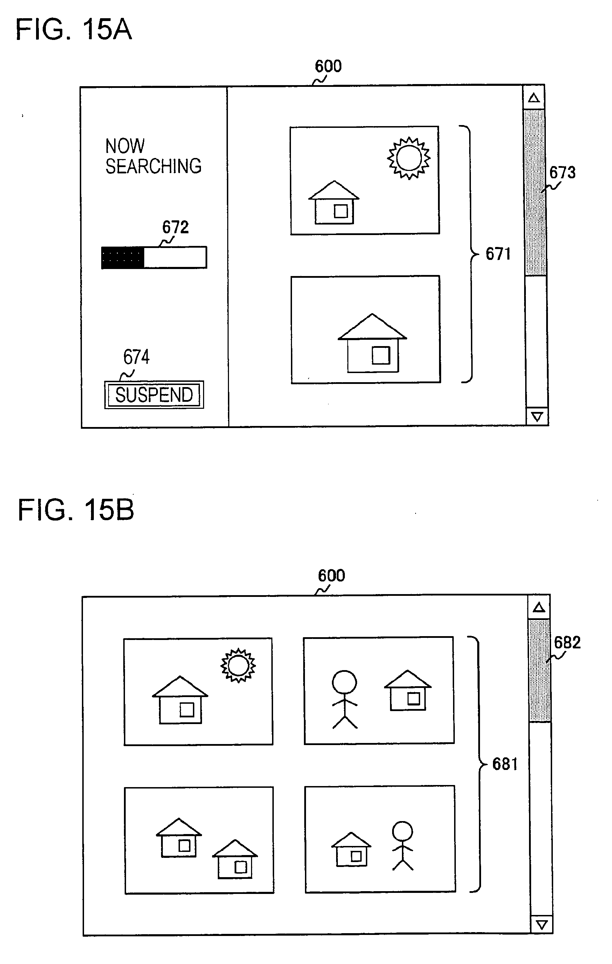

Figs. 15A and 15B illustrate a display screen 600 presented when a target image containing an image similar to a template image is searched in accordance with one embodiment of the present invention. Fig. 15A illustrates the display screen 600 presented in the middle of the searching of the target image containing the image similar to the template image.

When a target image 671 containing the image similar to the template image is hit in the search, the target image 671 is displayed on the display screen 600. The target image 671 may be a thumbnail. The order of the target images to be displayed on the display screen 600 is from high adaptivity to low adaptivity. The number of template images to be displayed on the display screen 600 at a time may be two. Using a scroll control 673, another hit template image may be displayed.

With a search progress display 672 showing the progress of search arranged on the display screen 600, a user can monitor the current status of search. With a suspend button 674 for suspending the search process, the user may suspend the search process when a desired target image is hit and displayed.

Fig. 15B illustrates the display screen 600 when the searching of the target image containing the image similar to the template image has been completed. When the search process ends, a target image 681 containing the image similar to the template image is displayed as the search result on the display screen 600. The number of template images displayed on the display screen 600 at a time is four, for example. Using a scroll control 682, another hit template image may be displayed.

Operation of the image pickup apparatus 100 in accordance with one embodiment of the present invention is described below with reference to the drawings.

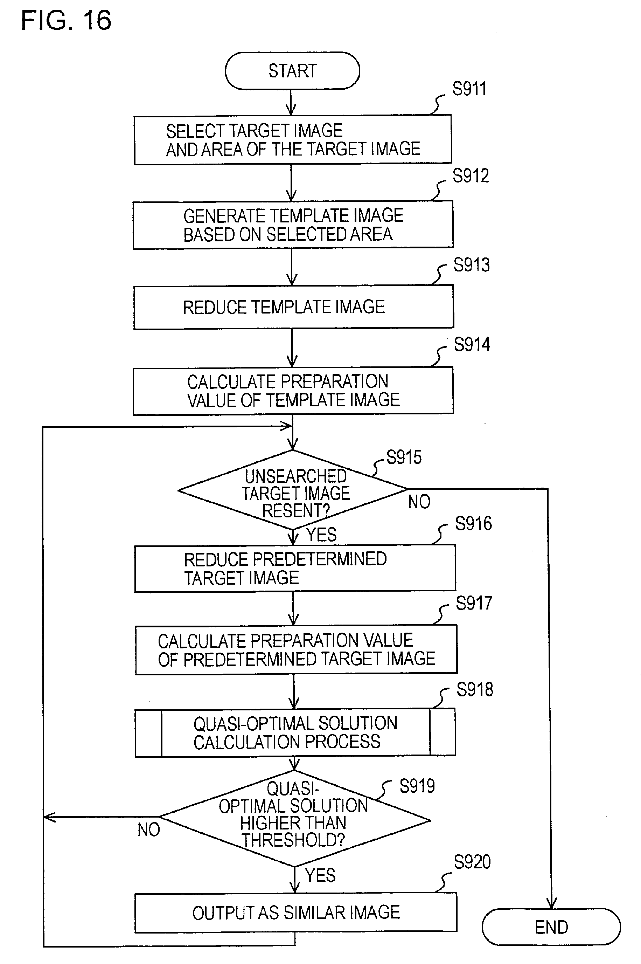

Fig. 16 illustrates a search process for searching the target image containing the image similar to the template image in accordance with one embodiment of the present invention. The area selection receiver 601 receives one selection of target images stored on the target image storage unit 231 and selection of an area in that target image (step S911). When the selection is received, the search process starts.

The template image generator 301 generates a template image in accordance with an area of the target image received (step S912). In step S912, images obtained through expanding, reducing, and rotating the image corresponding to the area of the target image with the selection thereof received are also generated as the template images.

The image reducer 302 reduces the template image generated in step S912 at a reduction ratio corresponding to the horizontal width and the vertical height of the template image (step S913). The preparation value calculator 319 calculates the preparation value of the reduced template image (step S914).

It is determined in step S915 whether an unsearched target image is stored on the target image storage unit 231. If there is no unsearched target image, the search process ends. If it is determined in step S915 that unsearched target images are stored, the image reducer 302 reduces one of unsearched target images (step S916). The reduction ratio in step S916 equals the reduction ratio of the template image in step S913. The preparation value calculator 319 calculates the preparation value of the reduced target image (step S917).

The adaptivity for determining whether the predetermined target image reduced in step S917 contains the image similar to the template image is then calculated. The highest adaptivity is set as the quasi-optimal solution (step S918).

The similar image determiner 318 determines whether the adaptivity determined as the quasi-optimal solution in step S918 is higher than the predetermined threshold (step S919). If it is determined in step S919 that the adaptivity determined as the quasi-optimal solution in step S918 is higher than the predetermined threshold, the target image is determined to contain the image similar to the template image and is then output (step S920). If it is determined in step S919 that the adaptivity determined as the quasi-optimal solution in step S918 is lower than the predetermined threshold, the target image is determined not to contain the image similar to the template image. The above process is repeated until no unsearched template images are present on the target image storage unit 231 in step S915.

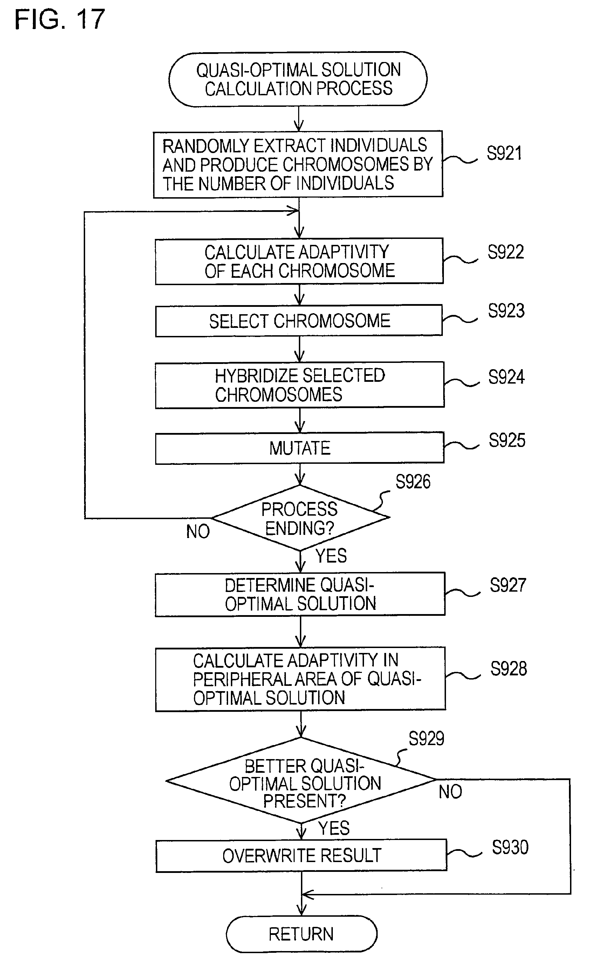

Fig. 17 illustrates a quasi-optimal solution calculation process performed in step S918 of Fig. 16. Individuals are randomly extracted from the target image. Chromosomes, having chromosome information, of the same number as the extracted individuals are generated (step S921). The chromosome information is generated based on the coordinates on the target image and the predetermined magnification ratio of the expansion or reduction of the template image.

The adaptivity of each chromosome is calculated (step S922). The calculation of the adaptivity is performed at two phases, one phase by the adaptivity calculation pre-processor 312 and the other phase by the adaptivity calculator 313.

The adaptivity calculation pre-processor 312 calculates the absolute value of the difference between the mean values of the pixel values in the matching areas of the target image and the template image, the ratio of the squared standard deviations of the pixel values in the matching areas in the target image and the template image, and the absolute value of the difference between the pixel values at the center points of the matching areas in the target image and the template image. The adaptivity calculation pre-processor 312 evaluates these resulting values using equations (10) through (13), and determines whether to exclude the values from the similarity determination process.

Using equations (1) through (3), the adaptivity calculator 313 calculates the adaptivity of the chromosome not determined to be excluded from the similarity determination process by the adaptivity calculation pre-processor 312. Since the adaptivity calculation pre-processor 312 determines beforehand the chromosome to be excluded from the similarity determination process, the amount of calculation of the adaptivity calculator 313 is reduced. High-speed searching process is thus performed.

A predetermined number of chromosomes are selected from the chromosomes having the adaptivities calculated in step S922 (step S923). In accordance with one embodiment of the present invention, the chromosomes are selected using the roulette discussed with reference to Fig. 10. The present invention is not limited to the use of the roulette.

The hybridization process is performed on the chromosomes of the predetermined number selected in step S923 (step S924). In accordance with one embodiment of the present invention, the hybridization process is performed in the manner discussed with reference to Figs. 11A and 11B. The present invention is not limited to this method.

The mutation process is performed on the chromosome (step S925). In accordance with one embodiment of the present invention, the mutation process is performed in the manner discussed with reference to Fig. 12. The present invention is not limited to the manner discussed with reference to Fig. 12.

The process performed in steps S922 through S925 is subject to a process end condition, in which the process is terminated after repeating the process to 50 generations of chromosomes. Subsequent to step S925, the process end indicator 315 determines whether the process end condition is satisfied (step S926).

If the process in steps S922 through S925 is determined to end, the quasi-optimal solution determiner 316 determines the highest adaptivity from among adaptivities calculated last as the quasi-optimal solution (step S927). The peripheral area quasi-optimal solution determiner 317 calculates the adaptivity in the peripheral area surrounding the matching area corresponding to the quasi-optimal solution determined in step S927 (step S928).

It is determined whether the adaptivity determined by the peripheral area quasi-optimal solution determiner 317 is better than the adaptivity corresponding to the quasi-optimal solution determined by the quasi-optimal solution determiner 316 (step S929). If the adaptivity determined by the peripheral area quasi-optimal solution determiner 317 is better than the adaptivity corresponding to the quasi-optimal solution determined by the quasi-optimal solution determiner 316, the highest adaptivity from among the adaptivities calculated by the peripheral area quasi-optimal solution determiner 317 is set to be the quasi-optimal solution. The resulting quasi-optimal solution overwrites the preceding quasi-optimal solution (step S930).

In accordance with one embodiment of the present invention, the image reducer 302 reduces the template image and the target image at the reduction ratio corresponding to the horizontal width and the vertical height of the template image. The areas to matched against each other between the template image and the target image are decreased, and the amount of calculation is also decreased. High-speed search process is thus performed. If the template image and the target image are reduced in size, difference and noise in the detail of each image typically not essential in the search process become difficult to detect, and search accuracy is increased.

Before the adaptivity calculator 313 calculates the adaptivity of the chromosome, the adaptivity calculation pre-processor 312 determines the adaptivity using the manner requiring a smaller amount of calculation. The amount of calculation of the adaptivity calculator 313 is thus reduced. With the adaptivity calculator 313 using the preparation value in the calculation of the cross-correlation function, the amount of calculation of the cross-correlation function is reduced. Even higher speed search process is performed with the two above-described advantages.

After the quasi-optimal solution is calculated using the genetic algorithm, the peripheral area quasi-optimal solution determiner 317 calculates the adaptivity in the peripheral area surrounding the matching area corresponding to the quasi-optimal solution. A better adaptivity is thus calculated. Image search accuracy is further increased.

The image pickup apparatus has been discussed as an example of the image processing apparatus in accordance with embodiments of the present invention. The present invention is applicable to other type of electronic apparatuses processing images.

The embodiments of the present invention have been discussed for exemplary purposes only. As will be discussed below, the elements in each embodiment correspond to the elements in each claim. The present invention is not limited to the correspondence discussed below, and various changes are possible in the correspondence without departing from the scope of the present invention.

In one embodiment of the present invention, the target image storage unit corresponds to the target image storage unit 231. The area selection receiving unit corresponds to the area selection receiver 601. The template image generating unit corresponds to the template image generator 301. The image reducing unit corresponds to the image reducer 302. The similar image searching unit corresponds to the similar image searcher 310.

In accordance with one embodiment of the present invention, the individual extracting unit corresponds to the individual extractor 311. The adaptivity calculating unit corresponds to the adaptivity calculator 313. The genetic algorithm processing unit corresponds to the genetic algorithm processor 314. The process end indicating unit corresponds to the process end indicator 315. The quasi-optimal solution determining unit corresponds to the quasi-optimal solution determiner 316. The similar image determining unit corresponds to the similar image determiner 318.

In accordance with embodiments of the present invention, the adaptivity calculation pre-processing unit corresponds to the adaptivity calculation pre-processor 312.

In accordance with one embodiment of the present invention, the preparation value calculating unit corresponds to the preparation value calculator 319. The template image preparation value table corresponds to the template image preparation value table 321. The target image preparation value table corresponds to the target image preparation value table 320.

In accordance with one embodiment of the present invention, the target image storage unit corresponds to the target image storage unit 231. The area selection receiving unit corresponds to the area selection receiver 601. The template image generating unit corresponds to the template image generator 301. The individual extracting unit corresponds to the individual extractor 311. The adaptivity calculating unit corresponds to the adaptivity calculator 313. The genetic algorithm processing unit corresponds to the genetic algorithm processor 314. The process end indicating unit corresponds to the process end indicator 315. The quasi-optimal solution determining unit corresponds to the quasi-optimal solution determiner 316. The peripheral area quasi-optimal solution determining unit corresponds to the peripheral area quasi-optimal solution determiner 317. The similar image determining unit corresponds to the similar image determiner 318.

In accordance with embodiments of the present invention, the target image storage unit corresponds to the target image storage unit 231. The step of receiving the selection of the predetermined area corresponds to step S911. The step of generating as the template image corresponds to step S912. The step of reducing the images corresponds to steps S913 and S916. The step of searching the similar image corresponds to steps S915, S918, and S919.

The process discussed with reference to the embodiments of the present invention may be considered as a method containing a series of steps. The process may be also considered as a program for causing a computer to perform the series of steps. The program may be stored on a recording medium.

It should be understood by those skilled in the art that various modifications, combinations, sub-combinations and alterations may occur depending on design requirements and other factors insofar as they are within the scope of the appended claims or the equivalents thereof.

**Claims**

1.  An image processing apparatus comprising:

> target image storage means for storing a plurality of target images as objects to be searched;
> area selection receiving means for receiving a selection of a predetermined area corresponding to one of the plurality of target images;
> template image generating means for generating as a template image the image of the area with the selection thereof received;
> image reducing means for reducing the template image and the target image at a reduction ratio corresponding to a vertical height and a horizontal width of the template image; and
> similar image searching means for searching the reduced target image containing an image similar to the reduced template image in accordance with a genetic algorithm.

2.  The image processing apparatus according to claim 1, wherein the image reducing means does not reduce the images if a product of the vertical height and the horizontal width of the template image is not more than a predetermined value.

3.  The image processing apparatus according to claim 1, wherein the template image generating means generates, as the template image, an image which the predetermined selected area is expanded or reduced to at a predetermined magnification ratio.

4.  The image processing apparatus according to claim 3, wherein the similar image searching means comprises:

> individual extracting means for extracting a plurality of individuals in a random fashion from the reduced target image in order to generate a chromosome having chromosome information based on coordinates of the individual and the predetermined magnification ratio at the expansion or reduction of the template image;
> adaptivity calculating means for calculating an adaptivity of the chromosome based on the chromosome information and a pixel value;
> genetic algorithm processing means for performing at least one of a selection process, a hybridization process, and a mutation process on the chromosome having the adaptivity calculated by the adaptivity calculating means in order to generate a chromosome having new chromosome information, and causing the adaptivity calculating means to calculate an adaptivity of the chromosome having the new chromosome information;
> process end indicating means for indicating a process end to the process repeatedly performed in a predetermined condition by the genetic algorithm processing means;
> quasi-optimal solution determining means for determining, as a quasi-optimal solution, an adaptivity having the largest value from among the adaptivities calculated last by the adaptivity calculating means; and
> similar image determining means for determining that the reduced target image contains an image similar to the reduced template image when the quasi-optimal solution is above a first threshold value.

5.  The image processing apparatus according to claim 4, wherein the pixel value is a quantity expressed using one of YUV, RGB, and HSV.

6.  The image processing apparatus according to claim 5, further comprising adaptivity calculation pre-processing means for calculating the absolute value of a difference between the mean value of the pixel values in an area corresponding to the chromosome in the target image and the mean value of the pixel values in an area in the template image, and determining whether the absolute value of the difference is above a second threshold value, wherein the adaptivity calculating means sets, as the adaptivity, a value small enough to be excluded as the object to be determined by the similar image determining means when the adaptivity calculation pre-processing means determines that the absolute value of the difference is above the second threshold value.

7.  The image processing apparatus according to claim 5, further comprising adaptivity calculation pre-processing means for calculating the ratio of the square of the standard deviation of the pixel values in an area in the target image corresponding to the chromosome to the square of the standard deviation of the pixel values in an area in the template image, and determining whether the ratio of the two squared standard deviations falls within a predetermined range,

wherein the adaptivity calculating means sets, as the adaptivity, a value small enough to be excluded as the object to be determined by the similar image determining means when the adaptivity calculation pre-processing means determines that the ratio falls within the predetermined range.

**8.** The image processing apparatus according to claim 5, further comprising adaptivity calculation pre-processing means for calculating the absolute value of a difference between the pixel value at the center point of an area in the target image corresponding to the chromosome and the pixel value at the center point of an area in the template image, and determining whether the absolute value of the difference is above a second threshold value,

wherein the adaptivity calculating means sets, as the adaptivity, a value small enough to be excluded as the object to be determined by the similar image determining means when the adaptivity calculation pre-processing means determines that the absolute value of the difference is above the second threshold value.

**9.** The image processing apparatus according to claim 5, wherein the adaptivity calculating means calculates the adaptivity of the chromosome from a cross-correlation function based on the pixel value and the chromosome information.

**10.** The image processing apparatus according to claim 9, wherein the adaptivity calculating means calculates the product of a difference between the pixel value at any coordinates in the target image and the mean value of pixel values in the target image in an area where the target image and the template image overlap each other, and a difference between the pixel value at any coordinates in the template image and the mean value of the pixel values in the template image in the area where the target image and the template image overlap each other, sums the products at all coordinates in the area where the target image and the template image overlap each other, normalizes the sum, and uses the normalized sum as the cross-correlation function.

**11.** The image processing apparatus according to claim 9, further comprising:

preparation value calculating means for calculating a preparation value at each of all coordinates in the reduced template image and the reduced target image, the preparation value obtained by summing pixel values from the origin to any coordinates in the reduced template image and the reduced target image;
template image preparation value table for storing the preparation value in the reduced template image with the coordinates thereof in the reduced template image associated therewith; and
target image preparation value table for storing the preparation value in the reduced target image with the coordinates thereof in the reduced target image associated therewith,
wherein the adaptivity calculating means sums the pixel values in the cross-correlation function at all coordinates in the area where the target image and the template image overlap each other using the preparation value in order to calculate the adaptivity of the chromosome.

**12.** The image processing apparatus according to claim 8, wherein the adaptivity calculating means calculates the product of a difference between the pixel value at any coordinates in the target image and the mean value of pixel values in the target image in an area where the target image and the template image overlap each other, and a difference between the pixel value at any coordinates in the template image and the mean value of the pixel values in the template image in the area where the target image and the template image overlap each other, sums the products at all coordinates in the area where the target image and the template image overlap each other, normalizes the sum, uses the normalized sum as the cross-correlation function, calculates the cross-correlation function in terms of each of a plurality of elements forming the pixel value, squares the value resulting from the cross-correlation function, sums the squared values, calculates the square root of the resulting sum, and normalizes the square root value as the adaptivity.

**13.** The image processing apparatus according to claim 8, wherein the adaptivity calculating means calculates the product of a difference between the pixel value at any coordinates in the target image and the mean value of pixel values in the template image in an area where the target image and the template image overlap each other, and a difference between the pixel value at any coordinates in the template image and the mean value of the pixel values in the target image in the area where the target image and the template image overlap each other, sums the products at all coordinates in the area where the target image and the template image overlap each other, normalizes the sum, and uses the normalized sum as the cross-correlation function.

**14.** The image processing apparatus according to claim 8, wherein the adaptivity calculating means uses as the cross-correlation function the following equation representing cross-correlation at coordinates (X,Y):

$$f(X,Y) = \frac{\sum_{i=0}^{w}\sum_{j=0}^{h}\left(Target(X+i,Y+j)-M_{Template}\right)\left(Template(i,j)-M_{Target}\right)}{\sqrt{\sum_{i=0}^{w}\sum_{j=0}^{h}\left(Target(X+i,Y+j)-M_{Template}\right)^2\sum_{i=0}^{w}\sum_{j=0}^{h}\left(Template(i,j)-M_{Target}\right)^2}}$$

where w represents a width of the template image, h represents a height of the template image, Target (X+i,Y+j) represents a pixel value at coordinates (X+i,Y+j) in the target image, Template(i,j) represents a pixel value at coordinates (i,j) in the template image, $M_{target}$ represents the mean value of the pixel values in an area where the target image and the template image overlap each other, and $M_{template}$ represents the mean value of the pixel values in the template image.

**15.** An image processing apparatus comprising:

target image storage means for storing a plurality of target images as objects to be searched;
area selection receiving means for receiving selection of a predetermined area corresponding to one of the plurality of target images;
template image generating means for generating, as template images, an image in the area with the selection thereof received, and an image to which the image in the area is expanded or reduced at a predetermined magnification ratio;
individual extracting means for extracting a plurality of individuals in a random fashion from the reduced target image in order to generate a chromosome having chromosome information based on coordinates of the individual and the predetermined magnification ratio at the expansion or reduction of the template image;
adaptivity calculating means for calculating an adaptivity of the chromosome based on the chromosome information and a pixel value;
genetic algorithm processing means for performing at least one of a selection process, a hybridization process, and a mutation process on the chromosome having the adaptivity calculated by the adaptivity calculating means in order to generate a chromosome having new chromosome information, and causing the adaptivity calculating means to calculate an adaptivity of the chromosome having the new chromosome information;
process end indicating means for indicating a process end to the process repeatedly performed in a predetermined condition by the genetic algorithm processing means;
quasi-optimal solution determining means for determining, as a quasi-optimal solution, an adaptivity having the largest value from among the adaptivities calculated last by the adaptivity calculating means;
peripheral area quasi-optimal solution determining means for calculating an adaptivity in a predetermined entire area surrounding the area of the template image corresponding to the quasi-optimal solution, and determining, as the quasi-optimal solution in the predetermined area, an adaptivity having the largest value from among the calculated adaptivities; and
similar image determining means for determining that the reduced target image contains an image similar to the reduced template image when the largest one of the quasi-optimal solution determined by the quasi-optimal solution determining means and the quasi-optimal solution in the predetermined area determined by the peripheral area quasi-optimal solution determining means is above a predetermined threshold.

**16.** An image processing method of an image processing apparatus including target image storage means storing a target image as an object to be searched, the image processing method comprising the steps of:

receiving a selection of a predetermined area corresponding to one of the plurality of target images;
generating as a template image the image of the area with the selection thereof received;
reducing the template image and the target image at a reduction ratio corresponding to a vertical height and a horizontal width of the template image; and
searching for the reduced target image containing an image similar to the reduced template image in accordance with a genetic algorithm.

**17.** A program for causing an image processing apparatus, including target image storage means storing a target image as an object to be searched, to perform the steps of:

receiving a selection of a predetermined area corresponding to one of the plurality of target images;

generating as a template image the image of the area with the selection thereof received;

reducing the template image and the target image at a reduction ratio corresponding to a vertical height and a horizontal width of the template image; and

searching for the reduced target image containing an image similar to the reduced template image in accordance with a genetic algorithm.

**18.** An image processing apparatus comprising:

a target image storage unit storing a plurality of target images as objects to be searched;

an area selection receiving unit receiving a selection of a predetermined area corresponding to one of the plurality of target images;

a template image generating unit generating as a template image the image of the area with the selection thereof received;

an image reducing unit reducing the template image and the target image at a reduction ratio corresponding to a vertical height and a horizontal width of the template image; and

a similar image searching unit searching the reduced target image containing an image similar to the reduced template image in accordance with a genetic algorithm.

**19.** An image processing apparatus comprising:

a target image storage unit storing a plurality of target images as objects to be searched;

an area selection receiving unit receiving selection of a predetermined area corresponding to one of the plurality of target images;

a template image generating unit generating, as template images, an image in the area with the selection thereof received, and an image to which the image in the area is expanded or reduced at a predetermined magnification ratio;

an individual extracting unit extracting a plurality of individuals in a random fashion from the reduced target image in order to generate a chromosome having chromosome information based on coordinates of the individual and the predetermined magnification ratio at the expansion or reduction of the template image;

an adaptivity calculating unit calculating an adaptivity of the chromosome based on the chromosome information and a pixel value;

a genetic algorithm processing unit performing at least one of a selection process, a hybridization process, and a mutation process on the chromosome having the adaptivity calculated by the adaptivity calculating unit in order to generate a chromosome having new chromosome information, and causing the adaptivity calculating unit to calculate an adaptivity of the chromosome having the new chromosome information;

a process end indicating unit indicating a process end to the process repeatedly performed in a predetermined condition by the genetic algorithm processing unit;

a quasi-optimal solution determining unit determining, as a quasi-optimal solution, an adaptivity having the largest value from among the adaptivities calculated last by the adaptivity calculating unit;

a peripheral area quasi-optimal solution determining unit calculating an adaptivity in a predetermined entire area surrounding the area of the template image corresponding to the quasi-optimal solution, and determining, as the quasi-optimal solution in the predetermined area, an adaptivity having the largest value from among the calculated adaptivities; and

a similar image determining unit determining that the reduced target image contains an image similar to the reduced template image when the largest one of the quasi-optimal solution determined by the quasi-optimal solution determining unit and the quasi-optimal solution in the predetermined area determined by the peripheral area quasi-optimal solution determining unit is above a predetermined threshold.

FIG. 1A

100a

120a

110a

FIG. 1B

100a

130a

FIG. 1C

100b

110b

FIG. 1D

100b

130b

# FIG. 2

# FIG. 3

SIMILAR IMAGE SEARCHER 310

61

## FIG. 4A

## FIG. 4B

## FIG. 4C

## FIG. 4D

## FIG. 5

320

| 3201 | 3202 | 3203 |
|---|---|---|
| COORDINATES | ii(X、Y) | iii(X、Y) |
| A | ii(A) | iii(A) |
| B | ii(B) | iii(B) |
| C | ii(C) | iii(C) |
| ⋮ | ⋮ | ⋮ |

EP 1 783 637 A2

FIG. 6A

600

501

610

621

622

623

FORWARD    BACKWARD    OK

SELECT IMAGE

FIG. 6B

502

600

612    614    611

503

625    624

RETURN    SELECT AREA    OK

613

FIG. 7A

FIG. 7B

## FIG. 8A

## FIG. 8B

REDUCE BY K TIMES

FIG. 9

# FIG. 10

## FIG. 11A

421

CHROMOSOME
A

INTERCHANGED

422

CHROMOSOME
B

## FIG. 11B

423

CHROMOSOME
C

424

CHROMOSOME
D

# FIG. 12

EP 1 783 637 A2

431

432

CHROMOSOME

BIT REVERSED

## FIG. 13

630

631

632

640

641

## FIG. 14

650

651

652

653

660

## FIG. 15A

## FIG. 15B

## FIG. 16

```
                    START

                                              S911
        SELECT TARGET IMAGE
        AND AREA OF THE TARGET IMAGE

                                              S912
        GENERATE TEMPLATE IMAGE
        BASED ON SELECTED AREA

                                              S913
        REDUCE TEMPLATE IMAGE

                                              S914
        CALCULATE PREPARATION
        VALUE OF TEMPLATE IMAGE

                                              S915
              UNSEARCHED
              TARGET IMAGE                NO
              RESENT?

                    YES                       S916
        REDUCE PREDETERMINED
        TARGET IMAGE

                                              S917
        CALCULATE PREPARATION VALUE
        OF PREDETERMINED TARGET IMAGE

                                              S918
        QUASI-OPTIMAL SOLUTION
        CALCULATION PROCESS

                                              S919
              QUASI-
              OPTIMAL SOLUTION
        NO    HIGHER THAN
              THRESHOLD?

                    YES                       S920
        OUTPUT AS SIMILAR IMAGE                    END
```

# FIG. 17

```
        ┌──────────────────────────┐
        │   QUASI-OPTIMAL SOLUTION  │
        │   CALCULATION PROCESS     │
        └──────────────────────────┘
                    │
                    ▼
   ┌──────────────────────────────────┐
   │ RANDOMLY EXTRACT INDIVIDUALS      │ ─── S921
   │ AND PRODUCE CHROMOSOMES BY        │
   │ THE NUMBER OF INDIVIDUALS         │
   └──────────────────────────────────┘
                    │
                    ▼
   ┌──────────────────────────────────┐
   │   CALCULATE ADAPTIVITY            │ ─── S922
   │   OF EACH CHROMOSOME              │
   └──────────────────────────────────┘
                    │
                    ▼
   ┌──────────────────────────────────┐
   │   SELECT CHROMOSOME               │ ─── S923
   └──────────────────────────────────┘
                    │
                    ▼
   ┌──────────────────────────────────┐
   │   HYBRIDIZE SELECTED              │ ─── S924
   │   CHROMOSOMES                     │
   └──────────────────────────────────┘
                    │
                    ▼
   ┌──────────────────────────────────┐
   │   MUTATE                          │ ─── S925
   └──────────────────────────────────┘
                    │
                    ▼               S926
           ◇────────────────◇
    NO     │   PROCESS       │
  ◄────────│   ENDING?       │
           ◇────────────────◇
                    │ YES
                    ▼
   ┌──────────────────────────────────┐
   │   DETERMINE QUASI-                │ ─── S927
   │   OPTIMAL SOLUTION                │
   └──────────────────────────────────┘
                    │
                    ▼
   ┌──────────────────────────────────┐
   │   CALCULATE ADAPTIVITY IN         │ ─── S928
   │   PERIPHERAL AREA OF QUASI-       │
   │   OPTIMAL SOLUTION                │
   └──────────────────────────────────┘
                    │
                    ▼            S929
           ◇────────────────◇
           │   BETTER QUASI-  │   NO
           │   OPTIMAL SOLUTION│ ─────────┐
           │   PRESENT?        │          │
           ◇────────────────◇          │
                    │ YES                 │
                    ▼                     │
   ┌──────────────────────────────────┐  │
   │   OVERWRITE RESULT                │ ─── S930
   └──────────────────────────────────┘  │
                    │                     │
                    ◄─────────────────────┘
                    ▼
           ┌──────────────┐
           │   RETURN      │
           └──────────────┘
```

**REFERENCES CITED IN THE DESCRIPTION**

**Patent documents cited in the description**

- JP 2005293917 A

- JP 8263522 A